(19) Europäisches Patentamt
European Patent Office
Office européen des brevets

(11) **EP 3 265 431 B1**

(12) **EUROPÄISCHE PATENTSCHRIFT**

(45) Veröffentlichungstag und Bekanntmachung des Hinweises auf die Patenterteilung:
**02.12.2020 Patentblatt 2020/49**

(21) Anmeldenummer: **16711155.8**

(22) Anmeldetag: **04.03.2016**

(51) Int Cl.:
*C03B 5/235* (2006.01)    *F23N 1/02* (2006.01)
*F23N 5/02* (2006.01)

(86) Internationale Anmeldenummer:
**PCT/EP2016/054715**

(87) Internationale Veröffentlichungsnummer:
**WO 2016/139363 (09.09.2016 Gazette 2016/36)**

(54) **VERFAHREN ZUM GEREGELTEN BETRIEB EINES, INSBESONDERE REGENERATIV, BEHEIZTEN INDUSTRIEOFENS, STEUER- UND REGELEINRICHTUNG UND BEHEIZBARER INDUSTRIEOFEN**

METHOD FOR CONTROLLED OPERATION OF AN, IN PARTICULAR REGENERATIVE, HEATED INDUSTRIAL FURNACE, OPEN-LOOP AND CLOSED-LOOP CONTROL UNIT, AND HEATABLE INDUSTRIAL FURNACE

PROCÉDÉ DE FONCTIONNEMENT RÉGULÉ D'UN FOUR INDUSTRIEL CHAUFFÉ, NOTAMMENT À RÉGÉNÉRATION, DISPOSITIF DE COMMANDE ET DE RÉGULATION ET FOUR INDUSTRIEL POUVANT ÊTRE CHAUFFÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2015 DE 102015203978**

(43) Veröffentlichungstag der Anmeldung:
**10.01.2018 Patentblatt 2018/02**

(73) Patentinhaber: **STG Combustion Control GmbH & Co. KG**
**03050 Cottbus (DE)**

(72) Erfinder:
• **HEMMANN, Peter**
**03050 Cottbus (DE)**
• **BIRLE, Andreas**
**03046 Cottbus (DE)**
• **HEMMANN, Norwid**
**03050 Cottbus (DE)**
• **KORTT, Jürgen**
**03050 Cottbus (DE)**

(74) Vertreter: **Eisenführ Speiser**
**Patentanwälte Rechtsanwälte PartGmbB**
**Anna-Louisa-Karsch-Strasse 2**
**10178 Berlin (DE)**

(56) Entgegenhaltungen:
**DE-A1-102010 041 155    DE-A1-102010 041 157**
**DE-A1-102013 204 840**

EP 3 265 431 B1

**Beschreibung**

Die Erfindung betrifft ein Verfahren, gemäß dem Oberbegriff des Anspruchs 1 zum geregelten Betrieb eines, insbesondere regenerativ, beheizten Industrieofens und eine entsprechende Steuer-und Regeleinrichtung und einen entsprechenden beheizbaren Industrieofen.

Grundsätzlich ist ein Industrieofen der eingangs genannten Art nicht auf die Verwendung in der Glasherstellung beschränkt. Z. B. kann ein Industrieofen der eingangs genannten Art auch in der Metallherstellung oder dergleichen eingesetzt werden. Ein regenerativer Industrieofen der eingangs genannten Art hat sich jedoch als besonders geeignet in der Glasherstellung zum Schmelzen von Glas erwiesen.

Bei einem, insbesondere regenerativ, beheizten Industrieofen erfolgt regelmäßig eine separate Zufuhr von Brennstoff und eines gasförmigen Sauerstoffträgers, insbesondere Brennluft und/oder Sauerstoff, sodass bereits aus diesem Grund eine besondere Steuerung und Regelung im Unterschied zu Brennerregelungen erforderlich ist, welche Brennluft und/oder Sauerstoff über einen gemeinsamen Brenner zuführen..

Bislang wird die Steuerung regenerativer Glasschmelzöfen --d. h. regelmäßig mittels Steuerung über den Oberofen im Ofenraum als Regelstrecke-- ausschließlich Reglern, wie PID-Reglern oder dergleichen, anvertraut, welche die Regelung einer Ofentemperatur, konkret in der Regel Oberofentemperatur, zum Ziel haben und deren Ausgang entweder eine Brennstoffmenge selbst darstellt oder eine Brennluftmenge, der dann aber die Brennstoffmenge in einstellbarem Verhältnis folgt; immer liegt also eine Brennstoffmenge am Ausgang solcher Regelungen.

Nach allgemein verbreiteter Praxis wird ein Einsatz von Brenngas als Brennstoff an Industrieöfen entweder manuell durch den Anlagenfahrer oder durch einen automatischen Regler laufend korrigiert, um erkennbaren Veränderungen der gemessenen Ofen Ofentemperatur entgegenzuwirken und eine Solltemperatur möglichst konstant aufrecht zu erhalten. Soweit hierbei Schwankungen des Energiegehaltes des Brenngases auftreten, wird erwartet, dass der Anlagenfahrer oder der Temperaturregler dies ebenfallsdann durch Wahl der notwendigen Brenngasmenge-- so ausgleichen, dass die vorgegebene Solltemperatur eingehalten werden kann.

Aufgrund des hohen Wärmespeichervermögens eines Industrieofens einschließlich seines Wärmgutes, werden Temperaturveränderungen jedoch zumeist erst nach Stunden sichtbar und ihre Korrektur nimmt ebenso viel oder längere Zeit in Anspruch, da die angepasste Brenngasmenge erst durch den Regelalgorithmus gefunden werden muss. Ein besonders vorteilhaftes Regelverfahren der Anmelderin auf Grundlage einer Temperaturregelung ist beispielsweise aus DE 10 2010 041 155 A1 bekannt. Darin ist erläutert, dass u. a. ein stabiler, gleichmäßiger Brennstoffstrom ohne unnötige Schwankungen und gegebenenfalls die thermische Symmetrie von Regeneratoren eine Voraussetzung für eine effiziente Beheizung ist.

Bei einer vorhandenen Heizwertmessung oder einer anderen on-line Messung des Energiegehaltes des Brenngases ist es üblich, den Sollwert der Brenngasmenge manuell oder automatisch entsprechend einer gemessenen Veränderung des Heizwertes oder der "Wobbe"-Zahl des Brenngases anzupassen. Jedoch wird weit verbreitet das Luftverhältnis zwischen Brenngas und Brennluft hierbei nicht verändert.

DD 213 746 beschreibt ein Verfahren zur Optimierung von Gas-Luft-Gemischen, insbesondere für Stadtgas, bei dem also das Brennstoff-Luft-Gemisch in Abhängigkeit von der "Wobbe"-Zahl des Brenngases und des $O_2$-Gehaltes im Abgas verändert wird. Dazu erfolgt die Aufschaltung einer gemessenen "Wobbe"-Zahländerung auf die Regelung der Brenngaszufuhr, zugleich auch die Aufschaltung des Brennstoffvolumenstroms, der "Wobbe"-Zahl und eines gemessenen $O_2$-Gehaltes als Korrektur des Sollwertes der Brennluftzufuhr. Die Einführung einer regelungstechnischen Korrektur zuerst der Brenngasmenge und dann nochmal der Brennluftmenge führt jedoch erfahrungsgemäß, insbesondere für nahstöchiometrische Verbrennung, zu unerwünschter Regelungenauigkeit, die für das so beschriebene Verfahren offenbar durch die zusätzliche Aufschaltung eines gemessenen $O_2$-Konzentration im Abgas nachträglich wieder korrigiert wird. Für den zunehmend wichtigeren Fall nahstöchiometrischer oder gewollt unterstöchiometrischer Verbrennung ist dieses Verfahren nicht mehr geeignet.

In wachsendem Maße werden nun Industrieöfen mit Brenngasen schwankender Zusammensetzung beliefert, da die Brenngase immer häufiger aus verschiedenen Quellen gemischt werden, z. B. Erdgas aus Russland, Erdgas aus der Nordsee, Erdgas aus Nordafrika, Erdgas aus Fracking usw.

Schwankungen der Brenngaszusammensetzung haben gleichzeitige Auswirkungen:

- auf den in den Industrieofen eingetragenen Energiestrom,

- auf den zugehörigen Brennluft- oder Sauerstoffbedarf,

- auf die Korrektheit der Brenngasvolumenstrommessung als Folge unterschiedlicher Gasdichte,

- auf den thermischen Wirkungsgrad der Flammen aufgrund veränderter Wärmeverluste mit dem aus dem Ofenraum austretenden Abgasstrom,

EP 3 265 431 B1

- auf die Verbrennungsdynamik der Flammen im Industrieofen auf den Flammenimpuls.

DE 10 2013 204 840 A1 beschreibt ein eingangs genanntes Verfahren zur Steuerung eines regenerativ beheizten Industrieofens. Darin ist insbesondere für Brennstoffe mit variablem Heizwert beschrieben, dass ein bei der Verbrennung des Brennstoffs umgesetzter Sauerstoffverbrauch aus der zugeführten Verbrennungsluft und dem Restsauerstoff bestimmt wird, und der Sauerstoffverbrauch als Maß für eine eingesetzte Brennstoffenergie verwendet wird, wobei ein Brennstoffstrom zur Injektion, derart eingestellt wird, dass der Sauerstoffverbrauch auf einen vorbestimmten Wert des Sauerstoffverbrauchs geregelt wird. D.h. wie beispielhaft in [0083] der DE 10 2013 204 840 A1 beschrieben wird praktisch aus der Signalauswertung der Sauerstoffmessung am Ausgang des Brennraumes ein vorgegebener Lambdawert aufrechterhalten.

Die herkömmlichen Regelverfahren erweisen sich nun aber als zu langsam. Insbesondere gewährleisten diese nicht die vorausschauende Reaktion auf messbare Brenngasschwankungen, d. h. sie reagieren erst auf eine, z. B. gegebenenfalls. Stunden, sehr viel später sichtbare Veränderung von Ofentemperaturen.

Ferner ist zu berücksichtigen, dass der Brennstoffeinsatz und die Dosierung von Sauerstoff bzw. Brennluft gleichzeitig korrigiert werden müssen um eine gleichbleibende Feuerung zu gewährleisten. Industrieöfen sind diesbezüglich umso empfindlicher für solche Probleme, je näher die Verbrennung nahstöchiometrisch betrieben wird, z. B. um die Emission von Stickoxid und ebenso den Energieverbrauch klein zu halten.

Ferner ist zu berücksichtigen, dass die on-line Messung des Energiegehalts eines Brenngases und die gleichzeitige online Bestimmung des stöchiometrischen Brenn-Luft/Sauerstoff-Bedarfs je Energieeinheit hohe Anforderungen an die dazu erforderliche Messgerätetechnik und ihre Genauigkeit stellen (Gaschromatographen); diese zu erfüllen ist für kleinere und mittlere Anlagen häufig mit unverhältnismäßigem Aufwand verbunden.

Wünschenswert wäre demzufolge ein Regelverfahren, das allein mit einer zuverlässigen on-line Messung des Heizwertes des Brenngases diejenige Dosierung sowohl von Brenngas als auch von Sauerstoff und/oder Brennluft sichern kann, geeignet ist, konstante und optimierte Verbrennungsbedingungen zu gewährleisten. Ein besonders vorteilhaftes Regelverfahren der Anmelderin, insbesondere auch für den zunehmend wichtigeren Fall nahstöchiometrischer oder gewollt unterstöchiometrischer Verbrennung, ist beispielsweise aus DE 10 2010 041 157 A1 bekannt. Das genannte Regelverfahren weist eine Lambdaregelung mit Falschluftindikation auf, das zur Kompensation veränderlicher Falschluft verwendet wird. Dort wurde auch erkannt, dass typische wiederkehrende Trendmuster eines unkontrollierten Falschluftzutritts oder des unkontrollierten Falschluftverlustes bei einem regenerativ befeuerten Industrieofen beobachtet werden können, die mit einer allmählichen und langsamen Korrektur des Luftverhältnisses nicht oder nur unvollkommen ausgeglichen werden können während eine schnelle Korrektur des Luftverhältnisses an einer ungünstigen Regeldynamik des Industrieofens scheitert.

Treten bei seiner Anwendung Schwankungen der Brenngaszusammensetzung auf, so wird dies als Schwankung der Falschluft interpretiert und korrigiert. Obwohl dieser Ansatz in die richtige Richtung wirkt, führt die Vermischung verschiedener physikalischer Effekte (z. B. Veränderungen der realen Falschluft und Veränderungen des stöchiometrischen Brenn-Luft/Sauerstoff-Bedarfs je Energieeinheit im Gefolge von Schwankungen der Brenngaszusammensetzung) leicht zu Problemen in der Genauigkeit oder Dynamik der Regelung.

Wünschenswert wäre demzufolge auch ein Regelverfahren, das den Einfluss von Schwankungen der realen Falschluft und den Einfluss von Schwankungen der Brenngaszusammensetzung in verschiedenen Regelgrößen, jedoch gleichzeitig wirkend kompensiert. Ein solches Regelverfahren sollte möglichst robust und möglichst wenig empfindlich für Genauigkeitsschwankungen sein.

Die Aufgabe der Erfindung ist es, ein Verfahren und eine Vorrichtung zur Regelung anzugeben, bei der die eingangs genannten Probleme jedenfalls ansatzweise behoben oder gemindert werden. Insbesondere ist es eine Aufgabe der Erfindung, ein verbessertes Verfahren und Vorrichtung zum geregelten Betrieb eines, insbesondere regenerativ, beheizten Industrieofens, insbesondere mit einer Schmelzwanne, insbesondere für Glas, sowie eine dazu ausgebildete Steuerung und einen verbesserten regenerativ beheizten Industrieofen sowie eine verbesserte Steuereinrichtung anzugeben.

Vorzugsweise soll das Verfahren und die Vorrichtung auch bei Schwankungen der Brennstoffzusammensetzung, insbesondere Brenngaszusammensetzung wirksam sein. Vorzugsweise soll das Verfahren und die Vorrichtung auch für den zunehmend wichtigeren Fall nahstöchiometrischer oder gewollt unterstöchiometrischer Verbrennung wirksam sein. Insbesondere soll ein Regelverfahren des Verfahrens und der Vorrichtung möglichst robust und wenig empfindlich für Brennstoffzusammensetzungen, insbesondere Brenngaszusammensetzungen, und/oder Genauigkeitsschwankungen sein. Das Regelverfahren sollte insbesondere allein mit einer zuverlässigen on-line Messung des Heizwertes des Brenngases diejenige Dosierung sowohl von Brenngas als auch von Sauerstoff und/oder Brennluft zu sichern in der Lage sein, die geeignet ist, verbesserte, insbesondere konstante und optimierte Verbrennungsbedingungen zu gewährleisten.

Die in dieser Beschreibung angegebenen Formel-Zeichen --regelmäßig in Klammern gesetzt-- sollen zur Erläuterung dienen, sind aber keinesfalls einschränkend gemeint hinsichtlich des tatsächlich beanspruchten Gegenstands.

Die Aufgabe hinsichtlich des Verfahrens wird mit einem Verfahren des Anspruchs 1 zum geregelten Betrieb eines, insbesondere regenerativ, beheizten Industrieofens gelöst.

Vorzugsweise ist vorgesehen, dass sich:

- der vorgegebene, insbesondere konstant vorgegebenen, Luft/SauerstoffÜberschuss (SP_LAMBDA), aus einer technologisch optimierten Prozessführung ergibt und/oder

- der Energiebedarf (E), insbesondere als Energie-SOLL-Wert (SP_ENERGIE), aus einer Vorgabe einer Temperatur für den Ofenraum ergibt, und/oder

- der vorgegebene, insbesondere als "energiebezogene Luft/Sauerstoff"-Konstante (LMINE, OMINE, LMINX) konstant vorgegebenen, stöchiometrische BrennLuft/Sauerstoff-Bedarf aus einer Langzeitermittlung ergibt. Vorzugsweise ist auch vorgesehen, dass sich:

- der Energiebedarf (E), insbesondere als Energie-SOLL-Wert (SP_ENERGIE), aus einer Vorgabe einer Temperatur für den Ofenraum ergibt,

- der Heizwert des Brennstoffes (BS) aus einem aktuell bestimmten Heizwert des Brennstoffes (BS) ergibt.

Die Aufgabe hinsichtlich der Vorrichtung wird mit einer Steuer- und/oder Regeleinrichtung des Anspruchs 15 gelöst.

Die Erfindung umfasst auch einen Industrieofen gemäß Anspruch 16.

Unter Brennstoff ist insbesondere Brenngas zu verstehen. Andere Brennstoffe wie Öl, z. B. Heizöl, oder dergleichen sind ebenfalls zum Betrieb eines Industrieofens möglich. Auch Gemische aus Brenngas und Brennöl sind möglich.

Unter einem Injektor ist insbesondere eine Eindüseeinrichtung zu verstehen, die ausgebildet ist, Brennstoff unmittelbar vor einem Ofenraum in einer Zuführstrecke oder im Ofenraum einzudüsen, insbesondere getrennt von Brennluft. Eine Vermischung von Brennluft und Brennstoff ist erst im Ofenraum vorgesehen.

Der Ofenraum weist insbesondere einen Oberofen und einen Unterofen auf. Ein Unterofen weist insbesondere eine Glasschmelzwanne oder dergleichen auf.

Unter einem gasförmigen Sauerstoffträger ist vorliegend insbesondere Luft (Brennluft) oder Sauerstoff, d. h. Gas mit einem Sauerstoffanteil > 99%, zu verstehen; d.h. allgemein ein gasförmiger Sauerstoffträger wie z.B. Luft mit 20,94% Sauerstoffanteil, technischer Sauerstoff mit nahezu 100 % Sauerstoffanteil aber ebenso auch mit Sauerstoff angereicherte Brennluft mit z. B. 21..25% Sauerstoffanteil oder mit Abgas verdünnte Brennluft mit z. B. 17...21% Sauerstoffanteil. Wenn im folgenden somit von Brenn-Luft/Sauerstoff-Bedarf je Energieeinheit die Rede ist so wird darunter auch entsprechend zu verstehen sein: der Bedarf an Brennluft, Brennluftstrom, Brennluftmengenregelung, bzw. --wahlweise zusätzlich oder alternativ-- der Bedarf an Brennsauerstoff, Brennsauerstoffstrom, Brennsauerstoffmengenregelung, Brennsauerstoffbedarf. Insofern ist vorliegend sehr wohl zwischen Luft und Sauerstoff zu unterscheiden. Es ist aber grundsätzlich auch so, dass wenn in dieser Anmeldung beispielhaft nur bezüglich "Luft" oder "Sauerstoff" erläutert sein sollte, auch --wahlweise zusätzlich oder alternativ-- beispielhaft ein anderer gasförmiger Sauerstoffträger in Frage kommt.

Weitere vorteilhafte Weiterbildungen der Erfindung sind den Unteransprüchen zu entnehmen und geben im Einzelnen vorteilhafte Möglichkeiten an, das oben erläuterte Konzept des Verfahrens und/oder der Steuereinrichtung und/oder des Industrieofens im Rahmen der Aufgabenstellung sowie hinsichtlich weiterer Vorteile zu realisieren.

Vorzugsweise betrifft eine Weiterbildung der Erfindung --betreffend Brennluft bezogene Aspekte des Konzepts der Erfindung-- ein Verfahren zur Regelung von Brennstoff, insbesondere Brenngas, und Brennluft eines Industrieofens oder eines Teilbereiches eines Industrieofens, mit vorausschauender Kompensation von Schwankungen der Brennstoff-, insbesondere Brenngaszusammensetzung. Gemäß der Weiterbildung ist insbesondere vorgesehen, dass der Sollwert des Brennluftvolumenstroms (SP_BRENNLUFT) einem Energie-SOLL-Wert (SP_ENERGIE) in einem festen Verhältnis (LMINE) der Brennluftmenge pro Energieeinheit, multipliziert mit einem Sollwert für den gewünschten Luftüberschuss (SP_LAMBDA) folgt, während gleichzeitig der Sollwert des Brennstoff-, insbesondere Brenngas-Stroms (SP_BRENNGAS) demselben Energie-SOLL-Wert (SP_ENERGIE) in einem variablen, Verhältnis folgt, gebildet aus dem Reziproken des aktuell gemessenen unteren Heizwertes als Energie je Brenngasvolumeneinheit.

Vorzugsweise betrifft eine Weiterbildung der Erfindung --betreffend Sauerstoff bezogene Aspekte-- ein Verfahren zur Regelung von Brennstoff, insbesondere Brenngas, und Sauerstoff eines Industrieofens oder eines Teilbereiches eines Industrieofens, mit vorausschauender Kompensation von Schwankungen der Brenngaszusammensetzung. Gemäß der Weiterbildung ist insbesondere vorgesehen, dass der Sollwert des Sauerstoffstroms (SP_OXYGEN) einem Energie-SOLL-Wert (SP_ENERGIE) in einem festen Verhältnis (OMINE) der Sauerstoffmenge pro Energieeinheit, multipliziert mit einem Sollwert für den gewünschten Sauerstoffüberschuss (SP_LAMBDA) folgt, während gleichzeitig der Sollwert des Brenngasstroms (SP_BRENNGAS) demselben Energie-SOLL-Wert (SP_ENERGIE) in einem variablen, Verhältnis folgt, gebildet aus dem Reziproken des aktuell gemessenen unteren Heizwertes als Energie je Brenngasvolumeneinheit.

Vorzugsweise ist vorgesehen, dass

- der Strom des gasförmigen Sauerstoffträgers, insbesondere des Brennluftstroms und/oder des Sauerstoffstroms, insbesondere als Prozesswert eines Stroms des gasförmigen Sauerstoffträgers, insbesondere eines Brennluftvolumenstroms (SP_BRENNLUFT) und/oder eines Sauerstoffvolumenstroms (SP_OXYGEN), folgt dem fest vorgegebenen, als "energiebezogene Luft/Sauerstoff'-Konstante (LMINE, OMINE, LMINX) konstant vorgegebenen, stöchiometrischen Brenn-Luft/Sauerstoff-Bedarf als Luft/Sauerstoff-Menge pro Energieeinheit , der sich aus einer Langzeitermittlung ergibt.

Zusätzlich oder alternativ ist vorgesehen, dass

- der Brennstoffstrom, als Prozesswert eines Brennstoffvolumenstroms (SP_BRENNGAS), folgt:

- einem variabel vorgegebenen reziproken des Heizwertes des Brennstoffes (BS),

- als ein aktuell bestimmter Heizwert des Brennstoffes (BS), als Brennstoffmenge pro Energieeinheit.

Vorzugsweise ist für eine Temperaturregelung vorgesehen, dass

- aus einer Regelabweichung zwischen einem IST-Wert einer, insbesondere gemessenen und/oder rechnerisch ermittelten, Temperatur (T) des Ofenraums, der Energiebedarf (E) ermittelt wird. Zusätzlich oder alternativ kann dazu vorgesehen sein, dass

- das Stellglied der Regelschleife (RS) zugeordnet ist und die Temperaturregelung in der Regelschleife (RS) mit der Ofenraumtemperatur als Regelgröße und einem Regler, insbesondere einem PID-Regler, in der Regelschleife (RS) integriert ist.

Vorzugsweise ist vorgesehen, dass der Energiebedarf (E) ermittelt wird,

- unter Vorgabe einer gewünschten Temperatur des Ofenraums und/oder des Energiebedarfs (E), insbesondere unabhängig von einer Temperaturregelung in der Regelschleife (RS), und/oder

- als Ergebnis einer übergeordneten Temperaturregelung, einer Simulation auf Grundlage eines Ofenmodells und/oder einer Vorsteuerung.

Vorzugsweise ist vorgesehen, dass der Industrieofen ein regenerativ beheizter Industrieofen ist und/oder das Verfahren die Schritte aufweist:

- periodisch abwechselndes Führen von einerseits Brennluft zum Ofenraum in einer ersten Periodendauer und andererseits Abgas (AG) aus dem Ofenraum in einer zweiten Periodendauer separat vom Brennstoff mittels einem dem wenigstens einen Brennstoff-Injektor zugeordneten linken Regenerator und rechten Regenerator, die zur regenerativen Speicherung von Wärme aus dem Abgas und Übertragung von Wärme auf die Brennluft ausgebildet sind.

Vorzugsweise ist vorgesehen, dass der Strom des gasförmigen Sauerstoffträgers, insbesondere Brennluftstroms und/oder Sauerstoffstroms, insbesondere als Prozesswert eines Stroms des gasförmigen Sauerstoffträgers, insbesondere Brennluftvolumenstroms (SP_BRENNLUFT) und/oder Sauerstoffvolumenstroms (SP_OXYGEN), ermittelt wird unter Berücksichtigung des genannten Produkts und optional unter Abzug von Falschluft und/oder weiteren Luft-Korrekturen bzw. unter Abzug eines Sauerstoffanteils eines Wertes der Falschluft und/oder eines Sauerstoffanteils eines Wertes der weiteren Luft-Korrekturen.

Vorzugsweise ist die Option betreffend den Abzug von Falschluft bzw. den Abzug eines Sauerstoffanteils eines Wertes der Falschluft, vorgesehen:

- eine additive oder subtraktive Berücksichtigung der Falschluft bzw. des Sauerstoffanteils des Wertes der Falschluft, und/oder, dass

- dieser gewonnen wird aus dem summarischen Vergleich des Sollwertes für den Luft/Sauerstoff-Überschuss (SP_LAMBDA) mit einem gemessenen Luft/SauerstoffÜberschuss (SP_LAMBDA),

- insbesondere als Ergebnis einer kontinuierlichen Abgasanalyse am Ende des Brennraumes.

Eine diesbezügliche Weiterbildung --betreffend Brennluft-- betrifft ein Verfahren, bei dem der gebildete Sollwert des Brenngasvolumenstroms (SP_BRENNLUFT) um einen Wert (FALSCHLUFT) (additiv) vergrößert oder (subtraktiv) verkleinert wird, wobei der Wert (FALSCHLUFT) die Summe aller unkontrollierten Zugänge minus unkontrollierter Abgänge sowie einer systematischen wiederholbaren Messungenauigkeit des Brennluftstromes repräsentiert. Der Wert (FALSCHLUFT) der kann gewonnen werden, insbesondere als Ergebnis einer kontinuierlichen Abgasanalyse am Ende des Brennraumes z. B, im Kopf eines Abgas führenden Regenerators oder im Abgas führenden Regenerator oder einem Abgas führenden Kanal. Es kann im wesentlichen ein summarischer Vergleich eines gemessenen Luftüberschusses (Prozesswert PV_LAMBDA) (ggfs. optional eines Sollwertes für den Luftüberschuss (SP_LAMBDA)) z. B. mit dem tatsächlichen Einsatz von Brennluft am Industrieofen herangezogen werden.

Entsprechend betrifft eine diesbezügliche Weiterbildung --betreffend Sauerstoff-- ein Verfahren, bei dem der gebildete Sollwert des Sauerstoffstroms SP_OXYGEN um den Sauerstoffanteil eines Wertes (FALSCHLUFT) vermindert wird, wobei der Wert (FALSCHLUFT) die Summe aller unkontrollierten Zugänge minus unkontrollierter Abgänge sowie einer systematischen wiederholbaren Messungenauigkeit und Unreinheit des Sauerstoffstroms repräsentiert. Der Wert der Falschluft kann gewonnen werden grundsätzlich aus dem summarischen Vergleich des eines gemessenen Luftüberschuss und/oder Sauerstoffüberschuss (PV_LAMBDA), insbesondere als Ergebnis einer kontinuierlichen Abgasanalyse am Ende des Brennraumes, (ggfs. optional eines Sollwertes für den Luftüberschuss und/oder Sauerstoffüberschuss (SP_LAMBDA)) z. B. mit dem tatsächlichen Einsatz von Brennluft am Industrieofen.

Im Rahmen einer bevorzugten Weiterbildung ist vorgesehen, dass der Wert der Falschluft gewonnen wird aus dem Produkt eines gemessenen Luft/Sauerstoff-Überschuss (Prozesswert PV_LAMBDA) multipliziert mit dem konstant vorgegebenen, stöchiometrischen Brenn-Luft/Sauerstoff-Bedarf als Luft/Sauerstoff-Menge pro Energieeinheit (LMINE), multipliziert mit dem Energieeintrag (E) in den Ofen als IST-Wert, abzüglich einer unabhängig gemessenen Luftmenge am Eingang des Ofens (Prozesswert der Verbrennungsluft PV_LUFT), insbesondere als Ergebnis einer kontinuierlichen Abgasanalyse am Ende des Brennraumes, vorzugsweise in einem Abgaskanal oder in einem Kopf eines Abgas führenden Regenerators.

Optional kann ggfs. anstatt dem Energieeintrag ein Quotient (SP_ENERGIE/ $\mu$_therm) von Energie-SOLL-Wert (SP_ENERGIE) und thermischen Wirkungsgrads ($\mu$_therm) genutzt werden.

Besonders bevorzugt ist vorgesehen, dass

- ein zeitlicher Verlauf der Werte für Falschluft bzw. eines Sauerstoffanteils jeweils der Werte der Falschluft ermittelt wird, insbesondere gemessen und/oder gewonnen wird, und

- der zeitliche Verlauf geglättet oder mit einem Ausgleichsverfahren behandelt wird, insbesondere mit einer statistischen oder Fehlerausgleichs-Methode, insbesondere wobei

- ein Ansatz für die Glättung oder dergleichen Ausgleich gewonnen wird aus einer modellbasierten funktionalen Bestimmung der Falschluft.

Vorzugsweise kann die Falschluft bzw. der Sauerstoffanteil des Wertes der Falschluft bestimmt werden als Funktion eines Ofendrucks (p_Ofen), eines Drucks am Regeneratorfuß (p_RegFuß), einer Temperatur der Brennluft im Regenerator (T_VB) und einer Temperatur der Umgebung des Ofens (T_U); insbesondere bestimmt werden als XFM (p_Ofen, p_RegFuß, T_VB, T_U).

Zusätzlich oder alternativ hat es sich im Rahmen einer besonders bevorzugten Weiterbildung als vorteilhaft erwiesen, dass die Option betreffend den Abzug von Falschluft bzw. den Abzug eines Sauerstoffanteils eines Wertes der Falschluft eine additive oder subtraktive Berücksichtigung der Falschluft bzw. des Sauerstoffanteils des Wertes der Falschluft betrifft. Dieser Ansatz lässt sich also gemäß einer besonders bevorzugten Weiterbildung unterstützen mittels einer modellbasierten funktionalen Bestimmung der Falschluft. Die Falschluft bzw. der Sauerstoffanteil des Wertes der Falschluft wird vorteilhaft bestimmt als Funktion eines Ofendrucks (p_Ofen), eines Drucks am Regeneratorfuß (p_RegFuß), einer Temperatur der Brennluft im Regenerator (T_VB) und einer Temperatur der Umgebung des Ofens (T_U); insbesondere bestimmt wird als XFM (p_Ofen, p_RegFuß, T_VB, T_U).

Diese Weiterbildung hat erkannt, dass sich die eingangs genannten, aus DE 10 2010 041 157 A1 bekannten typischen wiederkehrenden Trendmuster eines unkontrollierten Falschluftzutritts oder des unkontrollierten Falschluftverlustes bei einem regenerativ befeuerten Industrieofen zurückführen lassen auf das zusammenwirken jedenfalls eines Ofendrucks (p_Ofen), eines Drucks am Regeneratorfuß (p_RegFuß), einer Temperatur der Brennluft im Regenerator (T_VB) und einer Temperatur der Umgebung des Ofens (T_U); insbesondere bestimmt sich damit die Falschluft als Funktion XFM (p_Ofen, p_RegFuß, T_VB, T_U).

Die Falschluft wird in dem Fall also gemessen und deren jedenfalls grundsätzlicher Verlauf bzw. Tendenz (Trendmuster) kann unter Berücksichtigung der genannten Basisgrößen in einem hinterlegten Modell des Industrieofens vorteilhaft im Rahmen einer Regelung und/oder Steuerung jedenfalls im Trendmuster antizipiert und/oder berücksichtigt werden.

Konkret wird dazu eine additive oder subtraktive Berücksichtigung der Falschluft bzw. des Sauerstoffanteils des Wertes der Falschluft vorgesehen, wobei ein zeitlicher Verlauf der Werte für Falschluft bzw. eines Sauerstoffanteils jeweils der Werte der Falschluft ermittelt wird, insbesondere gemessen wird, vorzugsweise gewonnen wird aus dem summarischen Vergleich des Sollwertes für den Luft/Sauerstoff-Überschuss (SP_LAMBDA) mit einem gemessenen Luft/Sauerstoff-Überschuss (SP_LAMBDA). Der zeitliche Verlauf geglättet wird, insbesondere mit einer statistischen oder Fehlerausgleichs-Methode. Es zeigt sich nämlich, dass grundsätzlich ein derart ermittelter Falschluftverlauf starken Schwankungen unterliegt, die zunächst statistisch erscheinen. Der zeitliche Verlauf ist somit nur in geglätteter oder ausgeglichener Form zur Eingabe in ein Regelungsverfahren sinnvoll. Eine Glättung kann rein statistisch aufgrund des zeitlichen Verlaufs der Falschluft erfolgen und/oder unter linearer oder polynomaler Interpolation unter Zuhilfenahme der Methode kleinster Fehlerquadrate, z.B. in Bezug auf die Ausgleichsgerade. Dies lässt sich noch verbessern, denn eine rein statistische Glättung kann fehlerhaft sein und ein Interpolationsansatz wird bei sich zeitlich ändernden Trendmustern eher instabil sein, insbesondere für unterschiedliche Feuerungsperioden. Im Rahmen der Weiterbildung wurde aber erkannt, dass als Ansatz für eine Glättung eine modellbasierte funktionale Bestimmung der Falschluft dienen kann. Insbesondere kann dabei die Falschluft bzw. der Sauerstoffanteil des Wertes der Falschluft bestimmt werden als Funktion eines Ofendrucks (p_Ofen), eines Drucks am Regeneratorfuß (p_RegFuß), einer Temperatur der Brennluft im Regenerator (T_VB) und einer Temperatur der Umgebung des Ofens (T_U); insbesondere bestimmt wird als XFM (p_Ofen, p_RegFuß, T_VB, T_U). Eine solche Funktion trägt auch sich ändernden Trendmuster Rechnung.

Dem Modell der Falschluftfunktion, insbesondere als Ansatz für eine Glättung des realen Falschluftverlaufs gem. der zeitlich ermittelten Werte der Falschluft dient die folgende Modellannahme. Zunächst geht das Modell vorteilhaft davon aus, dass die Falschluft sich entwickelt als Folge von Druckunterschieden eines Ofendrucks einerseits und eines Drucks am Regeneratorfuß andererseits bzw. eines Außendrucks außerhalb des Ofens. Vereinfacht gesagt scheint die Tendenz so zu sein, dass bei abnehmenden Ofendruck ein Druck am Regeneratorfuß bzw. ein Außendruck außerhalb des Ofens überwiegt und in der Lage ist zusätzlich Luft als Falschluft in den Ofen zu drücken. Der Modellansatz geht also dahin, dass ein Glättungsniveau für Falschluft eher steigt bei sinkendem Ofendruck bzw. eher fällt bei zunehmenden Ofendruck. Zusätzlich geht die Modellannahme davon aus, dass eine Temperatur der Verbrennungsluft im Regenerator die Dichte derselben beeinflusst und insofern bei zyklisch wiederkehrenden Temperaturänderungen sich auch die Dichte der Luft im Regenerator zyklisch ändert. Insofern führt dies ebenfalls zu einer Modulation des Drucks im Regenerator aufgrund der zyklisch wiederkehrenden Dichteänderung der Luft im Regenerator. Die zyklische Temperaturentwicklung wiederum resultiert im Wesentlichen darauf, dass die Verbrennungsluft zyklisch wiederkehrend aus dem Regenerator in den Ofenraum tritt und insofern dem Regenerator Wärme entzogen wird. Im Ergebnis hat das Modell erkannt, dass mit zunehmender Abkühlung der Luft im Regenerator die Dichte derselben ansteigt und ein Falschluftzutritt entsprechend abnimmt bzw. umgekehrt. Das Modell führt zu einem Glättungsansatz, der einen Falschlufteintrag insgesamt bei niedrigerem Ofendruck und höherer Temperatur im Regenerator anhebt bzw. absenkt wenn die Temperatur und damit die Dichte der Luft im Regenerator sinkt oder der Ofendruck steigt. Vereinfacht gesagt ist mit dem Glättungsansatz gemäß der modellbasierten funktionalen Bestimmung der Falschluft nach obiger Maßgabe eine Art Kaminmodell für einen Regenerator entworfen, der zur Modellierung eines Falschlufteintrags herangezogen werden kann so dass ein über dieses Modell gefilterter Falschluftverlauf in die Rängenregelung für den gasförmigen Sauerstoffträger gegeben werden kann.

Vorzugsweise ist vorgesehen, dass die Option betreffend die weitere Berücksichtigung von Luft-Korrekturen bzw. den Sauerstoffanteil eines Wertes der Luft-Korrekturen

- eine Toleranz des Energiebedarfs (E) berücksichtigt, und/oder

- der Energiebedarf um eine einstellbare Toleranzgröße gemindert wird,

- insbesondere wobei die Toleranzgröße mindestens so groß bemessen wird, dass Ungenauigkeiten der Bestimmung des Energiegehaltes des Brennstoffes den Sollwert des Stroms des gasförmigen Sauerstoffträgers, insbesondere des Brennluftstroms (SP_BRENNLUFT) und/oder Sauerstoffstroms (SP_OXYGEN), nicht verändern.

Eine diesbezügliche Weiterbildung --betreffend Brennluft-- betrifft ein Verfahren, bei dem der Sollwert des Brennluftvolumenstromes (SP_BRENNLUFT) dem MAXIMUM aus Energie-SOLL-Wert (SP_ENERGIE) und Prozesswert Energie (PV_ENERGIE) folgt, wobei der Prozesswert (PV_ENERGIE) um eine einstellbare Toleranzgröße gemindert wird, die vorzugsweise mindestens so groß bemessen wird, dass Ungenauigkeiten der Bestimmung des Energiegehaltes des Brenngases den Sollwert des Brennluftstroms (SP_BRENNLUFT) nicht verändern.

Entsprechend betrifft eine diesbezügliche Weiterbildung --betreffend Sauerstoff-- ein Verfahren, bei dem der Sollwert des Sauerstoffstroms (SP_OXYGEN) dem MAXIMUM aus Energie-SOLL-Wert (SP_ENERGIE) und Prozesswert Energie (PV_ENERGIE) folgt, wobei der Prozesswert PV_ENERGIE um eine einstellbare Toleranzgröße gemindert wird, die vorzugsweise mindestens so groß bemessen wird, dass Ungenauigkeiten der Bestimmung des Energiegehaltes des Brenngases den Sollwert des Sauerstoffstroms (SP OXYGEN) nicht verändern.

Zusätzlich oder alternativ hat es sich im Rahmen einer besonders bevorzugten Weiterbildung als vorteilhaft erwiesen, dass der Energiebedarf (E) bestimmt wird als eine Sollgröße für den technologisch notwendigen Energiebedarf (E) des Industrieofens oder eines zu regelnden Ofenbereiches, vorzugsweise unter Berücksichtigung eines, insbesondere veränderlichen, thermischen Wirkungsgrads ($\mu$_therm). Insbesondere kann zusätzlich oder alternativ ein solcher Energie-SOLL-Wert (SP_ENERGIE), vorzugsweise unter Berücksichtigung des, insbesondere veränderlichen, thermischen Wirkungsgrads ($\mu$_therm), bestimmt werden, insbesondere als Quotient (SP_ENERGIE/ $\mu$_therm) von Energie-SOLL-Wert (SP_ENERGIE) und thermischen Wirkungsgrads ($\mu$_therm). Vorzugsweise kann der Quotient (SP_ENERGIE/ $\mu$_therm) anstelle des Energie-SOLL-Werts (SP_ENERGIE) eingehen in die Ermittlung des Brennluftvolumenstroms (SP_BRENNLUFT) und/oder des Sauerstoffvolumenstroms (SP_OXYGEN). Diese Weiterbildung hat vorteilhaft erkannt, dass ein vorzugsweise zeitlich veränderlicher thermischer Wirkungsgrad hinzunehmende Schwankungen im Energiebedarf bereits vorteilhaft berücksichtigen kann; jedenfalls solche, die nicht bereits durch eine vorgenannte Toleranzgröße erfassbar sind.. Dies betrifft insbesondere thermische Bedarfsänderungen, wie sie durch den Ein- und Austrag von Abgas und Luft verursacht sind. Insofern kann der thermische Wirkungsgrad auch als eine Folge und/oder eine Funktion der Ofen- und Umgebungstemperatur sowie der Energie-Ein- und Austräge von Abgas und Verbrennungsluft dargestellt werden.

Gemäß einer besonders bevorzugten Weiterbildung ist vorgesehen, dass der Brennstoffstrom, insbesondere als Prozesswert eines Brennstoffvolumenstroms (SP_BRENNGAS), ermittelt wird unter Berücksichtigung des genannten Quotienten und optional unter Korrektur über eine Brennstoffbegrenzung und/oder weiteren Brennstoff-Korrekturen.

Vorzugsweise ist vorgesehen, dass die Option betreffend die Brennstoffbegrenzung

- eine Toleranz der Brennstoffmenge berücksichtigt, und/oder

- der Sollwert Brennstoff (SP_BRENNGAS) durch einen Faktor begrenzt wird, gebildet aus dem Quotienten (PV_BRENNLUFT*(1+TLZ)/SP_BRENNLUFT, PV_BRENNLUFT*(1+TLZ)/SP_OXYGEN) des Prozesswertes Brennluft und/oder Sauerstoffs, vergrößert um eine einstellbare Toleranzgröße (TLZ), geteilt durch den Sollwert des Brennluftstroms (SP_BRENNLUFT) und/oder Sauerstoffstroms (SP_OXYGEN), insbesondere Begrenzungsfaktor nach oben auf 1,0 zu begrenzen ist,

- und/oder wobei die Toleranzgröße (TLZ) so einzustellen ist, dass unvermeidliche Schwankungen der Messung des Brennluftmengenstroms (PV_BRENNLUFT) den Sollwert (SP_BRENNSTOFF) nicht beeinflussen bzw. unvermeidliche Schwankungen der Messung des Brenn-Luft/Sauerstoff-Mengenstroms (PV_BRENNLUFT, PV_OXYGEN) den Sollwert (SP_BRENNSTOFF, SP_OXYGEN) nicht beeinflussen.

Eine diesbezügliche Weiterbildung --betreffend Brennluft-- betrifft ein Verfahren, bei dem der Sollwert Brenngas (SP_BRENNGAS) durch einen Faktor begrenzt wird, gebildet aus dem Quotienten (PV_BRENNLUFT*(1+TLZ)/SP_BRENNLUFT) des Prozesswertes Brennluft, vergrößert um eine einstellbare Toleranzgröße (TLZ), geteilt durch den Sollwert des Brennluftstroms, wobei der Begrenzungsfaktor nach oben auf 1,0 zu begrenzen ist, und wobei die Toleranzgröße (TLZ) so einzustellen ist, dass unvermeidliche Schwankungen der Messung des Brennluftmengenstroms (PV_BRENNLUFT) den Sollwert (SP_BRENNSTOFF) nicht beeinflussen.

Eine diesbezügliche Weiterbildung --betreffend Sauerstoff-- betrifft ein Verfahren, bei dem der Sollwert Brenngas (SP_BRENNGAS) durch einen Faktor begrenzt wird, gebildet aus dem Quotienten (PV_OXYGEN*(I+TLZ)/SP_OXYGEN) des Prozesswertes Brennluft, vergrößert um eine einstellbare Toleranzgröße (TLZ), geteilt durch den Sollwert des Brennluftstroms, wobei der Begrenzungsfaktor nach oben auf 1,0 zu begrenzen ist, und wobei die Toleranzgröße (TLZ) so einzustellen ist, dass unvermeidliche Schwankungen der Messung des Brennluftmengenstroms (PV_BRENNLUFT) den Sollwert (SP_BRENNSTOFF) nicht beeinflussen.

Vorzugsweise ist vorgesehen, dass die Option betreffend weitere Brennstoff-Korrekturen,

- zusätzlich zu den Korrekturen des Sollwertes Brennstoff, insbesondere Brenngas (SP_Brenngas), ein Korrekturfaktor angebracht wird, der eine Veränderung des Energiebedarfs durch veränderte Abgasmenge berücksichtigt, und/oder

- eine Größe (AMINE) stöchiometrisches Abgasvolumen je Energieeinheit gebildet wird, deren Veränderung dem ursprünglichen Energiesollwert (SP_ENERGIE) aufzuschalten ist.

Eine diesbezügliche Weiterbildung betrifft ein Verfahren, bei dem zusätzlich zu den Korrekturen des Sollwertes Brenngas (SP_Brenngas) ein Korrekturfaktor angebracht wird der eine Veränderung des Energiebedarfs durch veränderte Abgasmenge berücksichtigt. Hierzu wird eine Größe (AMINE) stöchiometrisches Abgasvolumen je Energieeinheit gebildet, deren Veränderung dem ursprünglichen Energie-SOLL-Wert (SP_ENERGIE) aufzuschalten ist.

Insbesondere ist vorgesehen, dass sich der vorgegebene, insbesondere konstant vorgegebene, Luft/Sauerstoff-Überschuss (SP_LAMBDA),

- aus einer technologisch optimierten Prozessführung ergibt und/oder
- eingestellt wird hinsichtlich einer nah- oder unterstöchiometrischen Verbrennung ($\lambda <= 1$).

Ausführungsbeispiele der Erfindung werden nun nachfolgend anhand der Zeichnung beschrieben. Diese soll die Ausführungsbeispiele nicht notwendigerweise maßstäblich darstellen, vielmehr ist die Zeichnung, wo zur Erläuterung dienlich, in schematisierter und/oder leicht verzerrter Form ausgeführt. Im Hinblick auf Ergänzungen der aus der Zeichnung unmittelbar erkennbaren Lehren wird auf den einschlägigen Stand der Technik verwiesen. Dabei ist zu berücksichtigen, dass vielfältige Modifikationen und Änderungen betreffend die Form und das Detail einer Ausführungsform vorgenommen werden können, ohne von der allgemeinen Idee der Erfindung abzuweichen. Auch wenn die Erfindung vorliegend am Beispiel eines regenerativ beheizten Industrieofens für eine Glasschmelzanwendung beschrieben ist so kann das hier beschriebene Verfahren und das Konzept der Vorrichtung und Steuer- und Regeleinrichtung gleichermaßen von Interesse und Anwendung sein für nicht-regenerative Ofentype, wie diese beispielsweise bekannt sind als rekuperative Schmelzwanne, Unit-Melter und Oxy-Fuel Schmelzwanne (letztere mit Sauerstoff als gasförmiger Sauerstoffträger betrieben, aber immer ohne Regenerator).

Die in der Beschreibung, in der Zeichnung sowie in den Ansprüchen offenbarten Merkmale der Erfindung können sowohl einzeln als auch in beliebiger Kombination für die Weiterbildung der Erfindung wesentlich sein. Die allgemeine Idee der Erfindung ist nicht beschränkt auf die exakte Form oder das Detail der im Folgenden gezeigten und beschriebenen bevorzugten Ausführungsform oder beschränkt auf einen Gegenstand, der eingeschränkt wäre im Vergleich zu dem in den Ansprüchen beanspruchten Gegenstand. Bei angegebenen Bemessungsbereichen sollen auch innerhalb der genannten Grenzen liegende Werte als Grenzwerte Offenbart und beliebig einsetzbar und beanspruchbar sein.

Weitere Vorteile, Merkmale und Einzelheiten der Erfindung ergeben sich aus der nachfolgenden Beschreibung der bevorzugten Ausführungsbeispiele sowie anhand der Zeichnung; diese zeigt in:

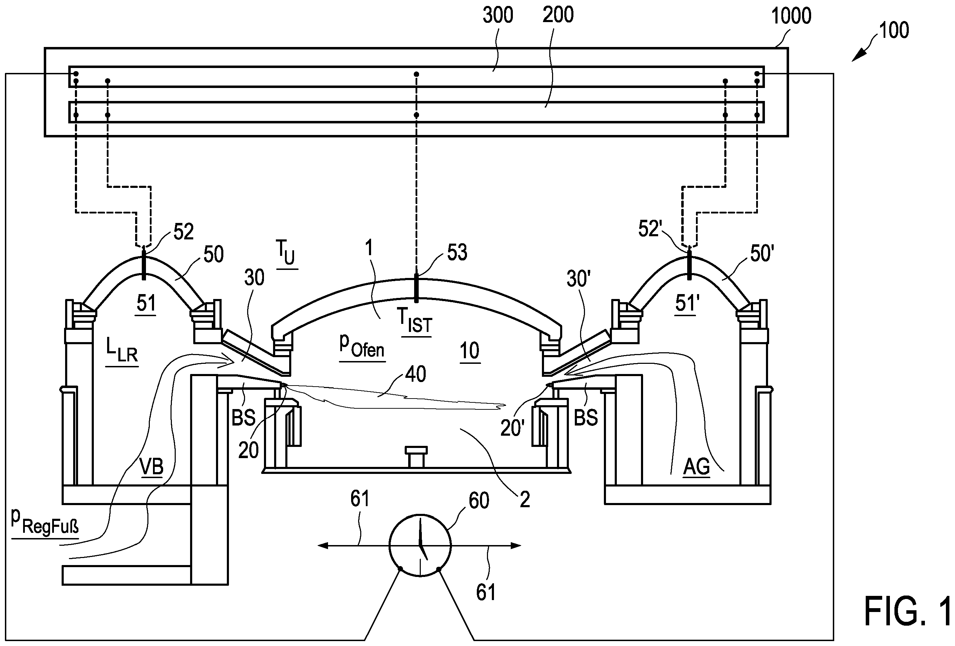

FIG.1 eine schematische Darstellung eines regenerativ beheizten Industrieofens mit einem linken und einem rechten Regenerator, bei der eine Steuereinrichtung mit einem Temperaturregelmodul und einem Regelmodul für eine Zufuhr von Brennstoff und eine Zufuhr von Brennluft gemäß einer besonders bevorzugten Ausführungsform vorgesehen ist;

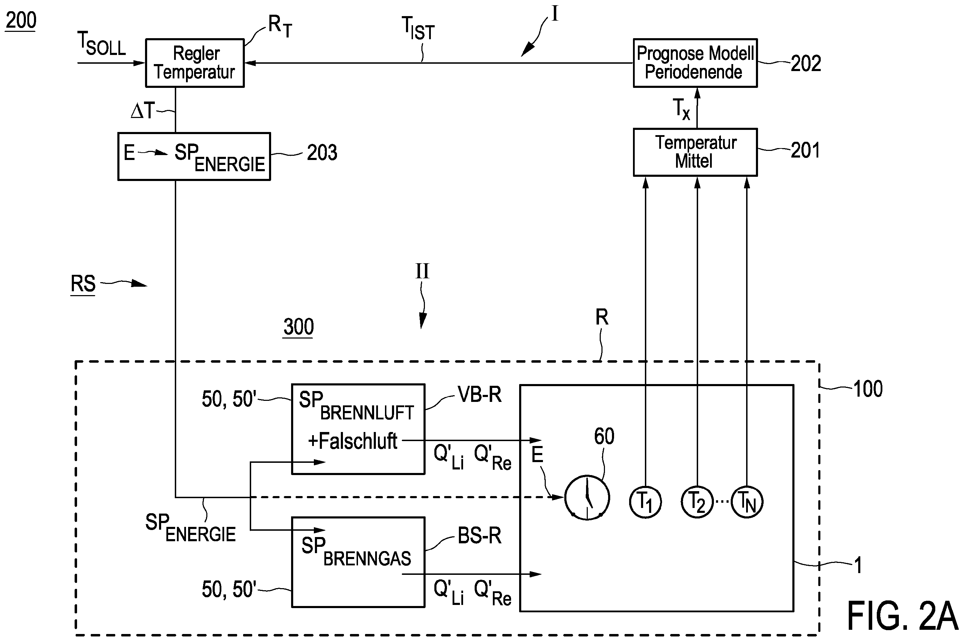

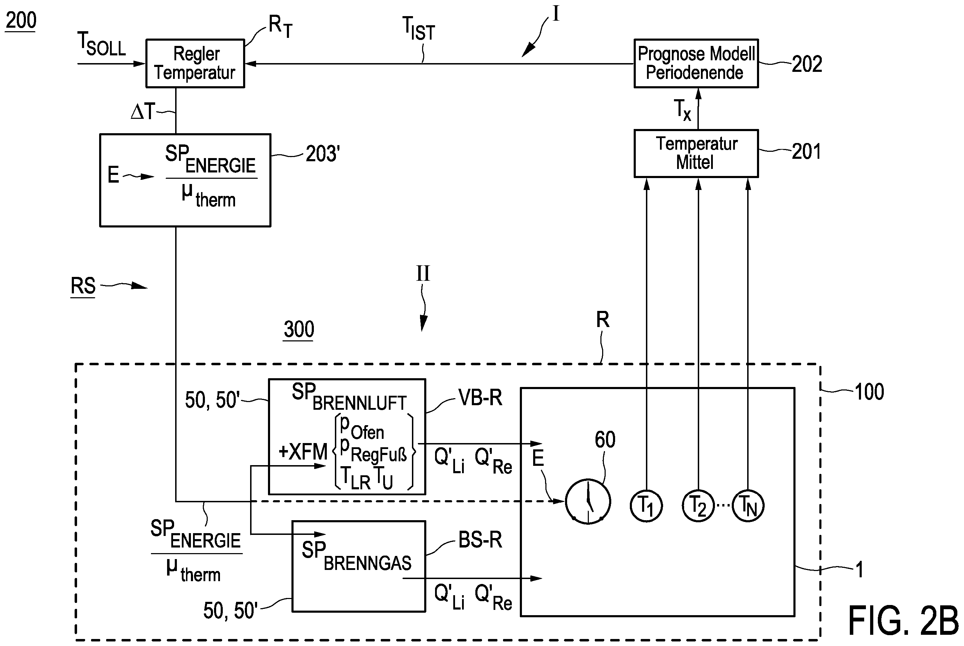

FIG.2A und FIG.2B eine schematische Darstellung einer ersten und zweiten besonders bevorzugten Ausführungsform eines Verfahrens zum geregelten Betrieb eines regenerativ beheizten Industrieofens mit einer Regelschleife für eine Temperaturregelung und einer Regelung der Zufuhr von Brennstoff und der Zufuhr von Brennluft für eine Steuereinrichtung der FIG.1 gemäß dem Konzept der Erfindung;

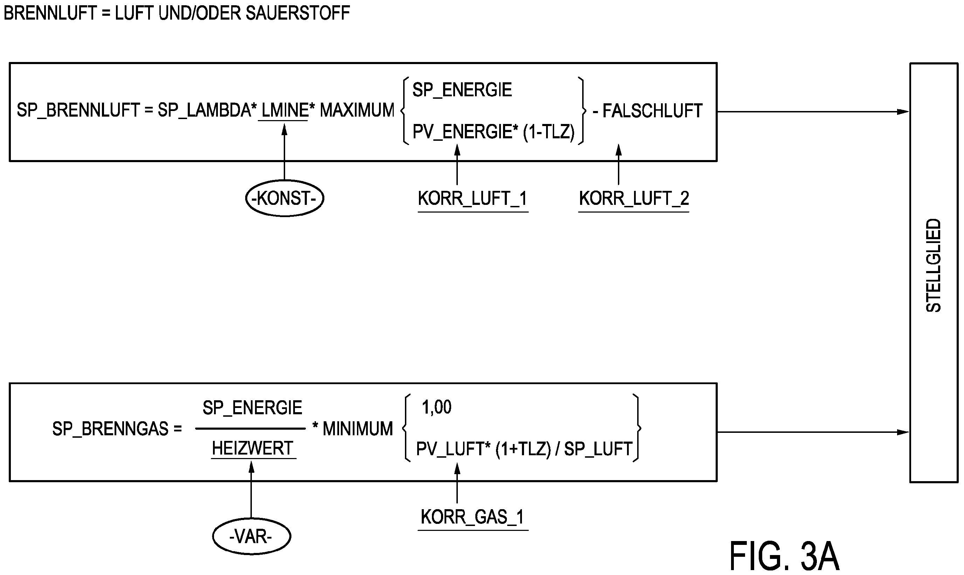

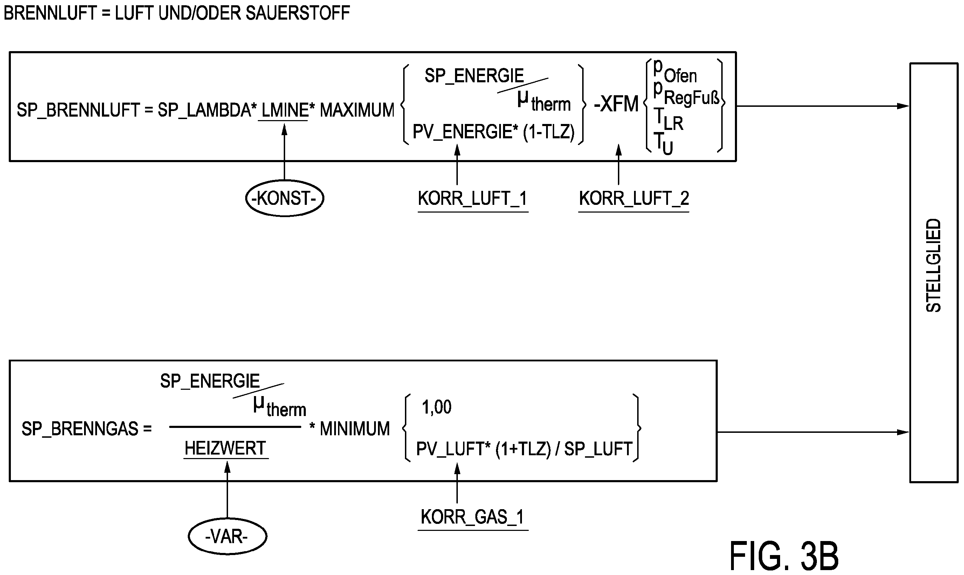

FIG.3A und FIG.3B eine schematische Darstellung der ersten und zweiten besonders bevorzugten Ausführungsform einer Regelung der Zufuhr von Brennstoff und der Zufuhr von Brennluft für eine Steuereinrichtung, die in Kombination mit einer Temperaturregelung wie in FIG.2A bzw. FIG.2B aber auch unabhängig von einer Temperaturregelung, z. B. mit einer manuellen Einstellung der Temperatur oder mit einer Steuerung oder Vorsteuerung - diese kann z. B. aus einem Ofenmodell, einer Simulation, Kennlinie oder Erfahrungswerten oder dergleichen Annahme resultieren.

FIG.1 zeigt in vereinfachter Darstellung einen regenerativ beheizten Industrieofen 100 mit einem Ofenraum 10, dessen Oberofenraum 1 als Regelstrecke geregelt wird und bei dem der Unterofenraum 2 eine nicht näher dargestellte Glasschmelzwanne aufweist. In der Glasschmelzwanne enthaltenes Glas wird über den Ofenraum 10 über die Schmelztemperatur erwärmt und zur Herstellung von Flachglas oder dergleichen aufgeschmolzen und geeignet behandelt. Der Industrieofen 100 wird vorliegend erwärmt, indem über mehrere seitlich angebrachte Brennstoffinjektoren 20 Brennstoff, vorliegend in Form von Brenngas, in den Oberofen 1 injiziert wird. Von den Brennstoffinjektoren 20 ist vorliegend ein linker Injektor 20 dargestellt. Von weiteren Brennstoffinjektoren 20' ist vorliegend ein rechter Injektor 20' dargestellt. Der Einfachheit halber sind im Folgenden für gleiche oder ähnliche Teile oder solche mit gleicher oder ähnlicher Funktion gleiche Bezugszeichen verwendet.

Beispielsweise können linksseitig bzw. rechtsseitig jeweils eine Anzahl von sechs Injektoren 20, 20' vorgesehen sein. In der in FIG.1 gezeigten Befeuerungsperiode wird über einen Brennstoffinjektor 20 Brenngas in den Oberofen 1 praktisch ohne Brennluft injiziert. Oberhalb des Brennstoffinjektors 20 wird vorgewärmte Brennluft VB über eine linksseitige Öffnung 30 dem Oberofen 1 zugeführt.

Die Brennluft aus der Öffnung 30 vermischt sich im Oberofen 1 mit dem vom Brennstoffinjektor 20 injizierten Brenngas und führt zur Ausbildung einer den Unterofen überdeckenden Flamme 40, die vorliegend symbolisch dargestellt ist. Das Bild der FIG.1 zeigt den Industrieofen 100 im Zustand einer regenerativen Befeuerung über den linken Regenerator 50 und die linken Injektoren 20. Diese und die Öffnung 30 ist derart gestaltet, dass das über die Injektoren 20 gelieferte Brenngas in ausreichendem nah- oder unter stöchiometrischen Bereich mit Brennluft des linken Regenerators im Oberofen 1 vermischt wird. Der in FIG.1 dargestellte Betriebszustand einer linksseitigen Befeuerung des Oberofens 1 unter Injektion von Brenngas über die linksseitigen Injektoren 20 und Zufuhr von Brennluft VB über den linken Regenerator 50 dauert für eine erste Periodendauer an von z. B. 20 bis 40 min. an. Die Dauer der Perioden ist hier symbolisch durch ein Uhr 60 dargestellt. Während dieser ersten Periodendauer wird Brennluft VB zum Oberofen 1 im Ofenraum 10 separat vom Brenngas 20 zugeführt. Während der ersten Periodendauer wird Abgas AG aus dem Oberofen 1 über rechtsseitige Öffnungen 30' dem rechten Regenerator 50' zugeführt und heizt diesen auf.

In einem zweiten Betriebszustand wird für eine zweite Periodendauer ähnlicher zeitlicher Länge die Befeuerung des Oberofens 1 umgekehrt. Die Dauer der Perioden ist hier symbolisch durch ein Uhr 60 dargestellt. Dazu wird dann Brennluft VB über den rechten Regenerator 50' dem Oberofen 1 zusammen mit Brenngas aus den rechten Injektoren 20' zugeführt, wobei die Brennluft VB dann die vom Abgas AG in der ersten Periodendauer im Regenerator 50' deponierte Wärme aufnimmt.

Die Regelung eines Brennstoffstroms und/oder eines Brennluftstroms erfolgt in diesem Ausführungsbeispiel bevorzugt und grundsätzlich über ein Temperaturregelmodul 200 einer Steuereinrichtung 1000 für den Industrieofen 100. Grundsätzlich kann dazu ein Regler, insbesondere ein PID-Regler, im Temperaturregelmodul 200 eingesetzt werden, wie er in FIG.2 als REGLER TEMPERATUR R_T näher bezeichnet ist. Gemäß diesem wird unter Erhöhung des Brennstoffstroms eines Brennstoffes BS (bevorzugt Brenngas) und/oder des Brennluftstroms der Brennluft VB eine Ofenraumtemperatur T_IST erhöht bzw. unter Erniedrigung eines Brennstoffstroms eines Brennstoffes BS (bevorzugt Brenngas) und/oder eines Brennluftstroms der Brennluft VB eine Ofenraumtemperatur T_IST erniedrigt; dies nach Maßgabe des in FIG.1 dargestellten Mengenbestimmungsmoduls 300.

Dem Temperaturregelmodul 200 werden dazu Temperaturwerte des Regeneratorkopfes 51 bzw. 51' oder des Oberofenraumes 1 über geeignete Temperatursonden 52, 52', 53 zugeführt, die vorliegend jedenfalls zum Teil auch mit einer geeigneten Lambdasonde zur Messung eines Brennstoff-Luft-Verhältnisses kombiniert sind. Insbesondere die über die Temperatursonde 53 gemessene Temperatur T_IST im Oberofen dient als Eingang des Temperaturregelmoduls 200, z. B. um darauf basierend eine Temperaturmittelung und eine Extrapolation des Temperaturverhaltens auf das Ende einer Periodendauer vorzunehmen. Insbesondere die Temperatursonden 52, 52', und vorliegend auch die Temperatursonde 53 liefern gemessene Temperaturen an den Eingang eines Mengenbestimmungsmoduls 300.

Insbesondere die Temperaturen an einem Regeneratorkopf, wie von den Temperatursonden 52, 52' gemessen, können als Grundlage für die weitere in FIG.2A und Fig.2B dargestellte Regelschleife zur Bestimmung und Einstellung des Brennstoffstroms eines Brennstoffes BS (bevorzugt Brenngas) und/oder des Brennluftstroms der Brennluft VB dienen. Auch die gegebenenfalls an gleicher Stelle angeordneten Lambda-Sonden oder andere Messfühler können Messwerte, z. B. über Luft oder Abgasmengen für eine vereinfachte Ermittlung liefern.

Des Weiteren weist ein Industrieofen 100 der FIG.1 eine Sensorik zur Messung eines Ofendrucks p_Ofen, eines Drucks am Regeneratorfuß p_RegFuß, einer Temperatur der Brennluft im Regenerator T_VB und einer Temperatur der Umgebung des Ofens T_U auf; insbesondere lässt sich so eine modellbasierte funktionale Bestimmung der Falschluft umsetzen, wobei die Falschluft bzw. der Sauerstoffanteil des Wertes der Falschluft bestimmt wird als Funktion XFM (p_Ofen, p_RegFuß, T_VB, T_U).

In Bezug auf FIG.2A und Fig.2B wird nunmehr der erste Teil I der Regelschleife des Temperaturregelmoduls 200 und der zweite Teil II der Regelschleife des Mengenbestimmungsmoduls 300 näher beschrieben.

FIG.2A und FIG.2B verdeutlich schematisch den Aufbau eines ersten Teils I einer Regelschleife RS für eine Temperaturregelung eines Temperaturregelmoduls 200 sowie den Aufbau eines zweiten Teils II der Regelschleife RS für eine Bestimmung der Menge der Brennluft VB und/oder des Brennstoffs BS --konkret eines Sollwerts SP_BRENNLUFT der in diesem Sinne realisierten Brennluftmengenregelung VB-R-- und/oder eines Sollwertes des Brenngasstromes SP_BRENNGAS --der in diesem Sinne realisierten Brennstoffmengenregelung BS-R-- in dem Mengenbestimmungsmodul 300 der Regelung betreffend jeweils den linken und rechten Regenerator 50, 50'; die hier mit ihren entsprechend einzubringenden Wärmemangen Q'_Li und Q'-Re dargestellt sind.

Auch wenn hier die Bezeichnungsweise für einen Brennstoff BS in Form von Brenngas gewählt ist, so ist dennoch im folgenden allgemein Bezug genommen auf einen Brennstoff, der insofern auch Öl, Kohlestaub oder ein anderer Brennstoff sein kann; bevorzugt ist vorliegend Brenngas. Auch wenn hier die Beschreibung eines Sauerstoffträger als Brennluft VB gewählt ist, so ist dennoch im folgenden allgemein Bezug genommen auf einen Sauerstoffträger, der insofern auch als zwar insbesondere Luft (Brennluft) aber auch Sauerstoff, d. h. Gas mit einem Sauerstoffanteil > 99% gebildet sein kann; d. h. allgemein ein gasförmiger Sauerstoffträger wie z.B. Luft mit 20,94 % Sauerstoffanteil, technischer Sauerstoff mit nahezu 100 % Sauerstoffanteil aber ebenso auch mit Sauerstoff angereicherte Brennluft mit z. B. 21..25 % Sauerstoffanteil oder mit Abgas verdünnte Brennluft mit z. B. 17...21% Sauerstoffanteil.

Die Regelung wird anhand einer bevorzugten Ausführungsform eines Verfahrens zum geregelten Betrieb des in FIG.1 beispielhaften gezeigten regenerativ beheizten Industrieofens 100 erläutert. Der mit I bezeichnete erste Teil der Regelschleife RS stellt die Temperaturregelung mit Regler R_T dar.

Für die erste Regelschleife I dient eine Ofenraumtemperatur T als Regelgröße. Dazu werden mehrere repräsentative Oberofentemperaturen $T_1$, $T_2$ ... $T_N$ z. B. mit geeigneten Temperatursensoren 52, 52', 53 gegebenenfalls mit geeigneter Korrektur gemessen. Insbesondere dient der Temperatursensor 53 zur Aufnahme der Ofenraumtemperatur T. Die auf eine Oberofentemperatur angepassten Temperaturwerte aus den verschiedenen Temperaturen $T_1$, $T_2$ .. $T_N$ werden in einer Mittelungseinheit 201 zur Bildung eines gewichteten Temperaturmittels $T_x$ gemittelt. Anschließend wird der Wert des Temperaturmittels $T_x$ einer Extrapolationseinheit 202 zugeführt, die in der Lage ist, nach Maßgabe eines typischen zeitlichen Verlaufs der repräsentativen Oberofentemperatur eine Vorhersage auf den Istwert der Temperatur $T_{IST}$ am jeweiligen Ende einer Feuerperiode der regenerativen Heizung zu bilden. Anstelle des aktuellen Temperaturwertes $T_x$ bildet eben diese vorhergesagte Temperatur $T_{IST}$ den Istwert des Temperaturreglers R_T. Der Temperaturregler R_T ist vorliegend in Form eines PID-Reglers gebildet, dem auch ein Sollwert der Temperatur T_SOLL zugeführt wird und der einen Bedarf an Brennstoffenergie E aus deren Differenz bestimmt.

Der mit II bezeichnete zweite Teil der Regelschleife RS stellt die Bestimmung der Menge der Brennluft VB und/oder des Brennstoffs BS betreffend den linken und rechten Regenerator 50, 50' dar.

Für beide Teile I, II der Regelschleife RS dient der Oberofen 1 im Ofenraum 10 des Ofens 100 als Teil der mit R bezeichneten Regelstrecke R. Die Regelstrecke R umfasst auch den linken Regenerator 50 und den rechten Regenerator 50' sowie die Orte der von den Regeneratoren 50, 50' bereitgestellten Wärme Q_Li und Q_Re aus vorgewärmter Brennluft VB, die dem Oberofen 1 zugeführt werden. Im eigentlichen Sinne handelt es sich um Wärmeflüsse, die in der FIG.2A und Fig.2B mit entsprechender Symbolik den Regeneratoren 50, 50' zugeordnet und dargestellt sind.

Ziel der Ofentemperaturregelung und der Mengenbestimmung für Brennluft VB und Brennstoff BS mit der Regelschleife RS ist es, so vorausschauend wie möglich diejenige Brennstoffmenge und/oder Brennluft zu bestimmen, welche die technologisch gewünschte Ofentemperatur T_SOLL sichert - und dies bei wechselnden Belastungen und veränderlichen Störgrößen. Ein stabiler, gleichmäßiger Brennstoffstrom ohne unnötige Schwankungen ist eine weitere Voraussetzung für effiziente Beheizung. Es sollte demzufolge nicht Aufgabe des Temperaturreglers sein, den unvermeidlichen Temperaturabfall des Gewölbes während etwa 35... 40 Sekunden feuerfreier Zeit der Umsteuerung durch erhöhten Brennstoffeinsatz ausgleichen zu wollen - ein weiterer Grund, warum ein einfacher PID-Regler die Aufgabe nicht lösen kann. Es sollte demzufolge aber auch nicht Aufgabe des Temperaturreglers --also des ersten Teils I der Regelschleife RS sein, den unvermeidlichen Schwankungen des Heizwertes eins Brennstoffes BS Rechnung zu tragen; die vorliegende Ausführungsform sieht somit eine Brennluftmengenregelung VB-R und eine Brennstoffmengenregelung BS-R vor, die im folgenden näher erläutert wird.

Im Unterschied zum Stand der Technik wird dazu bewusst nicht der durch den Heizwert des Brennstoffs BS dividierte, dem Temperaturbedarf entsprechende Energiebedarf E (Brennstoffmenge=E/HEIZWERT) als Brennstoffmenge weiterverarbeitet. Stattdessen wird eine besonders bevorzugte Brennluftmengenregelung VB-R und eine Brennstoffmengenregelung BS-R vorgesehen, welche insbesondere in der Lage ist, Schwankungen des Heizwertes eins Brennstoffes BS Rechnung zu tragen.

Dieser Brennluftmengenregelung VB-R und eine Brennstoffmengenregelung BS-R wird zunächst ein aus einem Temperaturbedarf ΔT=T_IST-T_SOLL des Ofens im Modul 203 ermittelter Energiewert E direkt zugeführt; d.h. das Regel-Verfahren gemäß dieser Ausführungsform arbeitet mit diesem Energiewert E --konkret dem gewünschten Energie_SOLL-Wert des gewünschten Energieeinsatzes SP_Energie-- der dem Ofen, Oberofen oder sonstigen Teil des Industrieofens bei der gegebenen Temperaturlage einerseits und der gegebenen Betriebsanforderung andererseits zuzuführen ist; mit anderen Worten der technologisch notwendige Energiebedarf E des Ofens.

Es wird also mit SP_ENERGIE z.B. in [MW] eine Sollgröße für den technologisch notwendigen Energiebedarf E des Industrieofens oder eines zu regelnden Ofenbereiches im Modul 203 gebildet.

Der Energie-SOLL-Wert SP_ENERGIE kann zwar auch unabhängig von vorgenannter Temperaturregelung im Teil I der Regelschleife RS sein (z.B. Ergebnis manueller Vorgabe durch den Anlagenfahrer oder Ergebnis einer übergeordneten Temperaturregelung oder eines Ofenmodells sein).

Insgesamt ist er aber gemäß einer ersten Ausführungsform --wie mit FIG.3A erläutert-- so bemessen (wie z.B. vorliegend gemäß dem Ausführungsbeispiel der Fig.2A automatisiert im Modul 203), dass eine vorgegebene Temperatur T_SOLL unter Beachtung einer aktuell zu erwärmenden Produktmenge eingehalten wird und zugleich möglicherweise schwankende Energieverluste ausgeglichen werden; also symbolisch ΔT=T_IST-T_SOLL zu einem Wert nahe NULL geregelt wird.

Insgesamt ist auch gemäß einer zweiten Ausführungsform --wie mit FIG.3B erläutert-der Quotient SP_ENERGIE/ μ_therm aus Energie-SOLL-Wert SP_ENERGIE und einem thermischen Wirkungsgrad μ_therm so bemessen (wie z.B. vorliegend gemäß dem Ausführungsbeispiel der Fig.2B automatisiert im Modul 203), dass eine vorgegebene Temperatur T_SOLL unter Beachtung einer aktuell zu erwärmenden Produktmenge eingehalten wird und zugleich möglicherweise schwankende Energieverluste ausgeglichen werden; also symbolisch ΔT=T_IST-T_SOLL zu einem Wert nahe NULL geregelt wird. Vorzugsweise geht bei der zweiten Ausführungsform der Quotient SP_ENERGIE/ μ_therm anstelle des Energie-SOLL-Werts SP_ENERGIE ein in die Ermittlung des Brennluftvolumenstroms SP_BRENNLUFT und/oder des Sauerstoffvolumenstroms SP_OXYGEN und/oder des Brenngasvolumenstroms SP_BRENNGAS.

Es zeigt sich nun --gemäß dem Konzept der Erfindung im zweiten Teil II der Regelschleife RS bei FIG.2A und FIG.2B umgesetzt-- dass über einen weiten Bereich schwankender Brennstoffzusammensetzung der Koeffizient aus stöchiometrischem BrennLuft/Sauerstoff-Bedarf (im Falle von Brennluft Brennluft-Bedarf; im Falle von Sauerstoff Sauerstoff-Bedarf) je Energieeinheit einerseits und Energiegehalt des Brennstoffs andererseits nahezu eine Konstante ist. Diese wird hier als Konstante bezeichnet, von z.B.

OMINE = stöchiometrischer Sauerstoffbedarf je Energieeinheit z. B. als [Nm3 Sauerstoff/kWh Brennstoffenergie]; oder

LMINE = stöchiometrischer Brennluftbedarf je Energieeinheit z.B. als [Nm3 Brennluft/kWh Brennstoffenergie]

mit LMINE = OMINE/0,2094; oder allgemein

mit LMINX = OMINE/(Sauerstoffanteil des Sauerstoffträgers, von z. B. 0,17 oder 0,25) für einen verallgemeinerten Sauerstoffträger. Luft ist insofern ein Sonderfall davon mit 0,2094.

Die Koeffizienten (vorzugsweise Konstanten) aus stöchiometrischem BrennLuft/Sauerstoff-Bedarf je Energieeinheit einerseits und Energiegehalt des Brennstoffs andererseits OMINE bzw. LMINE bzw. LMINX können --wie von der Erfindung erkanntüber lange Zeiträume als konstant behandelt werden und sind nicht von kurzfristigen Veränderungen des Heizwertes beeinflusst, d.h. mindestens über Stunden, üblicherweise über Tage und Wochen unverändert. Es wird hier allgemein für LMINE, OMINE, LMINX oder dergleichen Konstanten die Bezeichnung von "energiebezogene Luft/Sauerstoff"-Konstante oder auch "Energie-Lambda"-Konstante (LMINE, OMINE, LMINX od.dgl.) gewählt.

Es wird deshalb allgemein als Konzept der Erfindung eine Brennluftmengenregelung VB-R und eine Brennstoffmengenregelung BS-R --gemäß FIG.2A beispielhaft beschriebenbeansprucht der Form:

Brennluftvolumenstrom SP_BRENNLUFT ~ (gleich bzw. proportional) λ
* (multipliziert mit)
"energiebezogene Luft/Sauerstoff"-Konstante (LMINE, OMINE, LMINX)
*(multipliziert mit)
Energie-SOLL-Wert SP_ENERGIE bzw. Energiebedarf E,
sowie
optional, geeignete Korrekturen (KORR_LUFT_1, FIG.3) dazu, wie z. B. Falschluft-Korrekturen (KORR_LUFT_2,FIG.3);
und/oder
Brenngasstrom SP_BRENNGAS ~ (gleich bzw. proportional)
Energie-SOLL-Wert SP_ENERGIE bzw. Energiebedarf E
/ (geteilt durch)
HEIZWERT,
sowie
optional, geeignete Korrekturen (KORR_GAS_1, FIG.3) dazu, wie z. B. Inertgasanteils-Korrekturen.

Konkret ist in dem Ausführungsbeispiel der FIG.3 eine Brennluftmengenregelung VB-R und eine Brennstoffmengenregelung BS-R einer besonders bevorzugten speziellen Form realisiert, die im Folgenden erläutert wird. SP_ENERGIE wird durch eine laufende on-line Messung der aktuellen Brenngasqualität nicht beeinflusst.

Der Sollwert für den Brennluftstrom SP_LUFT wird laufend aktuell bestimmt unter Anwendung einer langzeitlich ermittelten und über längere Zeiträume als konstant behandelten Größe des stöchiometrischen Brenn-Luft/Sauerstoff-Bedarf je Energieeinheit LMINE:

$$SP\_LUFT = SP\_LAMBDA * LMINE * MAXIMUM \begin{Bmatrix} SP\_ENERGIE \\ PV\_ENERGIE*(1-TLZ) \end{Bmatrix} - FALSCHLUFT$$

Hierin sind:

| | |
|---|---|
| - SP_LUFT | der Sollwert der Brennluftmengenregelung |
| - SP_LAMBDA | den technologisch gewünschten und konstant zu haltenden Sauerstoffüberschuss zur optimalen Prozessführung als dimensionslose Kenngröße darstellt. |
| | Dabei bezeichnet SP_LAMBDA=1 die genau stöchiometrische Betriebsweise ohne jeglichen Luftüberschuss, während z.B. SP_LAMBDA = 1,100 einen gewünschten Luftüberschuss von 10% über dem stöchiometrischen Minimum darstellt oder z.B. SP_LAMBDA = 0,980 einen gewünschten Luftmangel von 2% unter dem stöchiometrischen Minimum darstellt. |
| - SP_ENERGIE | der oben beschriebene Sollwert des Energieeinsatzes |
| - PV_ENERGIE | der aktuelle Prozesswert desselben Energieeinsatzes |
| - TLZ | eine Toleranzgröße, beschrieben in Teilen von 1,00 |
| | z.B. TLZ=0,10 ergibt eine Toleranz gegen Schwankungen des aktuellen Prozesswertes PV_ENERGIE von 10%, so dass ein Überschießen des Energieeinsatzes um 10% gegenüber dem Sollwert SP_ENERGIE gerade noch keine Erhöhung des Sollwertes SP_LUFT bewirkt |
| - FALSCHLUFT | die Summe unkontrollierter Luftanteile darstellt und gewonnen wird aus dem kontinuierlichen Vergleich einer Messung von Restsauerstoff und CO im Abgas des Industrieofens mit dem tatsächlichen Einsatz von Brennluft an diesem Industrieofen. |

Zugleich wird durch eine kontinuierliche Messung on-line der aktuelle Energiegehalt des Brenngases als HEIZWERT z. B. als unterer Wert Hu in [kWh/Nm3] ermittelt und zur Korrektur des Sollwertes des Brenngasstromes verwendet:

$$SP\_BRENNGAS = \frac{SP\_ENERGIE}{HEIZWERT} * MINIMUM \begin{Bmatrix} 1,00 \\ PV\_LUFT*(1+TLZ)/SP\_LUFT \end{Bmatrix}$$

Damit wird jegliche vorausschauende Korrektur von Schwankungen der Brenngasqualität allein auf den Sollwert des Brenngasstroms angewendet, um den Energieeintrag konstant zu erhalten. Aus Sicherheitsgründen wird damit der Sollwert der Brenngasmenge für den Fall zu geringer Brennluftmenge begrenzt um einen Faktor

$$BEGRENZUNG = \frac{PV\text{-}LUFT * (1+TLZ)}{SP\_LUFT}$$

Hierin sind:

| | |
|---|---|
| - SP_BRENNGAS | der Sollwert für den Regelkreis |
| - SP_ENERGIE | derselbe Sollwert Energie, der auch für die Bestimmung des Sollwertes des Brennfuftstroms SP_BRENNLUFT verwendet wird |
| - HEIZWERT | der untere Heizwert Hu des Brenngases als aktuell gemessener Wert |
| - SP_LUFT | der Sollwert des Brennluftstroms |
| - PV_LUFT | der gemessene Prozesswert des Brennluftstroms |
| - TLZ | eine Toleranzgröße als Teil von 1 |

(2.) Es wird deshalb allgemein als Konzept der Erfindung eine Brennluftmengenregelung VB-R und eine Brennstoffmengenregelung BS-R --gemäß FIG.2B beispielhaft beschrieben-- beansprucht der Form:

Brennluftvolumenstrom SP_BRENNLUFT ~ (gleich bzw. proportional) λ
* (multipliziert mit)

"energiebezogene Luft/Sauerstoff"-Konstante (LMINE, OMINE, LMINX)
*(multipliziert mit)

Quotient SP_ENERGIE/ μ_therm von Energie-SOLL-Wert SP_ENERGIE und thermischen Wirkungsgrad μ_therm, d.h. der Energie-SOLL-Wert SP_ENERGIE bzw. Energiebedarf E korrigiert um einen , thermischen Wirkungsgrad μ_therm

sowie

optional, geeignete Korrekturen (KORR_LUFT_1, FIG.3B) dazu, wie z. B. Falschluft-Korrekturen (KORR_LUFT_2,FIG.3B);
und/oder

Brenngasstrom SP_BRENNGAS ~ (gleich bzw. proportional)

Quotient SP_ENERGIE/ μ_therm von Energie-SOLL-Wert SP_ENERGIE und thermischen Wirkungsgrad μ_therm, d.h. der Energie-SOLL-Wert SP_ENERGIE bzw. Energiebedarf E korrigiert um einen , thermischen Wirkungsgrad μ_therm
/ (geteilt durch)

HEIZWERT,
sowie

optional, geeignete Korrekturen (KORR_GAS_1, FIG.3B) dazu, wie z. B. Inertgasanteils-Korrekturen.

Konkret ist in dem Ausführungsbeispiel der FIG.3B eine Brennluftmengenregelung VB-R und eine Brennstoffmengenregelung BS-R einer besonders bevorzugten speziellen Form realisiert, die im Folgenden erläutert wird. SP_ENERGIE wird durch eine laufende on-line Messung der aktuellen Brenngasqualität nicht beeinflusst.

Der Sollwert für den Brennluftstrom SP_LUFT wird laufend aktuell bestimmt unter Anwendung einer langzeitlich ermittelten und über längere Zeiträume als konstant behandelten Größe des stöchiometrischen Brenn-Luft/Sauerstoff-Bedarf je Energieeinheit LMINE:

$$SP\_LUFT = SP\_LAMBDA * LMINE * MAXIMUM \begin{Bmatrix} SP\_ENERGIE / \mu\_therm \\ PV\_ENERGIE * (1 - TLZ) \end{Bmatrix} - XFM$$

Hierin sind neben dem Quotient SP_ENERGIE/ μ_therm von Energie-SOLL-Wert SP_ENERGIE und thermischen Wirkungsgrad μ_therm:

| | |
|---|---|
| - SP_LUFT | der Sollwert der Brennluftmengenregelung |
| - SP_LAMBDA | den technologisch gewünschten und konstant zu haltenden Sauerstoffüberschuss zur optimalen Prozessführung als dimensionslose Kenngröße darstellt. |
| | Dabei bezeichnet SP_LAMBDA=1 die genau stöchiometrische Betriebsweise ohne jeglichen Luftüberschuss, während z.B. SP_LAMBDA = 1,100 einen gewünschten Luftüberschuss von 10% über dem stöchiometrischen Minimum darstellt oder z.B. SP_LAMBDA = 0,980 einen gewünschten Luftmangel von 2% unter dem stöchiometrischen Minimum darstellt. |
| - SP_ENERGIE | der oben beschriebene Sollwert des Energieeinsatzes |
| - PV_ENERGIE | der aktuelle Prozesswert desselben Energieeinsatzes |
| - TLZ | eine Toleranzgröße, beschrieben in Teilen von 1,00 |
| | z.B. TLZ=0,10 ergibt eine Toleranz gegen Schwankungen des aktuellen Prozesswertes PV_ENERGIE von 10%, so dass ein Überschießen des Energieeinsatzes um 10% gegenüber dem Sollwert SP_ENERGIE gerade noch keine Erhöhung des Sollwertes SP_LUFT bewirkt |

(fortgesetzt)

| - FALSCHLUFT | die Summe unkontrollierter Luftanteile darstellt und gewonnen wird aus dem kontinuierlichen Vergleich einer Messung von Restsauerstoff und CO im Abgas des Industrieofens mit dem tatsächlichen Einsatz von Brennluft an diesem Industrieofen. |
|---|---|

Hier geht also der Quotient SP_ENERGIE/ $\mu$_therm von Energie-SOLL-Wert SP_ENERGIE und thermischen Wirkungsgrad $\mu$_therm ein, anstelle des Energie-SOLL-Werts SP_ENERGIE in die Ermittlung des Brennluftvolumenstroms SP_BRENNLUFT. Vereinfacht ausgedrückt hat diese Maßgabe eines thermischen Wirkungsgrad $\mu$_therm die Folge, dass Energieverluste bei der Ofenregelung in der Weise berücksichtigt werden, dass mit dem Quotienten SP_ENERGIE/ $\mu$_therm geregelt wird, also mit der im Ofen verbleibenden Energie. Zugleich wird durch eine kontinuierliche Messung on-line der aktuelle Energiegehalt des Brenngases als HEIZWERT z. B. als unterer Wert Hu in [kWh/Nm3] ermittelt und zur Korrektur des Sollwertes des Brenngasstromes verwendet:

$$SP\_BRENNGAS = \frac{SP\_ENERGIE/\,\mu\_therm}{HEIZWERT} * MINIMUM \left\{ \begin{array}{c} 1{,}00 \\ PV\_LUFT*(1+TLZ)/SP\_LUFT \end{array} \right\}$$

Damit wird jegliche vorausschauende Korrektur von Schwankungen der Brenngasqualität allein auf den Sollwert des Brenngasstroms angewendet, um den Energieeintrag konstant zu erhalten. Aus Sicherheitsgründen wird damit der Sollwert der Brenngasmenge für den Fall zu geringer Brennluftmenge begrenzt um einen Faktor

$$BEGRENZUNG = \frac{PV\text{-}LUFT * (1+TLZ)}{SP\_LUFT}$$

Hierin sind:

| - SP_BRENNGAS | der Sollwert für den Regelkreis |
|---|---|
| - SP_ENERGIE | derselbe Sollwert Energie, der auch für die Bestimmung des Sollwertes des Brennluftstroms SP_BRENNLUFT verwendet wird |
| - HEIZWERT | der untere Heizwert Hu des Brenngases als aktuell gemessener Wert |
| - SP_LUFT | der Sollwert des Brennluftstroms |
| - PV_LUFT | der gemessene Prozesswert des Brennluftstroms |
| - TLZ | eine Toleranzgröße als Teil von 1 |

Auch hier geht also Quotient SP_ENERGIE/ $\mu$_therm von Energie-SOLL-Wert SP_ENERGIE und thermischen Wirkungsgrad $\mu$_therm ein, anstelle des Energie-SOLL-Werts SP_ENERGIE in die Ermittlung des Brenngasvolumenstroms SP_BRENNGAS.

Die vorgenannte besonders bevorzugte zweite Ausführungsform nutzt mit Vorteil versehen zwei weiterbildende Varianten im Vergleich zur ersten Ausführungsform.

Zum einen wird für die Steuer- und/oder Regeltechnische Berücksichtigung der Falschluft ein mathematisches Modell dieser Steuergröße genutzt, das auf den Basisgrößen des Ofendrucks p_Ofen des Drucks am Regeneratorfuß p_RegFuß, der Temperatur der Brennluft im Regenerator T_LR und der Umgebungstemperatur T_U nutzt. Während bei der ersten Ausführungsform noch die Falschluft im Wesentlichen als Ergebnis einer Luftbilanz unter Messung eines Luftüberschusses (im Wesentlichen O2/CO2-Verhältnis im Regenerator) ermittelt, ist gemäß der zweiten Ausführungsform erkannt worden, dass sich die Falschluft mit dem mathematischen Modell jedenfalls in ihren wiederkehrenden Trends recht gut wiedergeben lässt in ihrer grundsätzlich periodischen Struktur. Letztlich führt dies zu einer antizipierenden Vorwegnahme eines Falschlufttrends. Die Regelung und/oder Steuerung ist so in der Lage näher am tatsächlichen Verhalten zu regeln und damit schneller bzw. antizipierend zu reagieren auf Änderungen in der Regelstrecke (Industrieofen).

Die Falschluft wird somit aus einem Modell basierten funktionalen Bestimmung ermittelt, wobei die Falschluft bzw. der Sauerstoffanteil des Wertes der Falschluft bestimmt wird, als Funktion XFM des Ofendrucks p_Ofen, des Drucks am Regeneratorfuß p_RegFuß, der Temperatur der Brennluft im Regenerator (T_VB) und einer Temperatur der Umgebung des Ofen T_U. Erstmals wird damit im Rahmen einer Modellbildung die Falschluft als Korrekturgröße modelliert, nämlich unter Nutzung des oben erläuterten "Kaminmodells" für einen Regenerator. Dieses berücksichtigt, wie erläutert, den unkontrollierten Eintrag von Frischluft (Falschluft) unter Wirkung des Aussendrucks und des Drucks am Regeneratorfuss (p_RegFuß) gegen den Ofendruck (p_Ofen). Die zyklische Temperaturentwicklung infolge des zyklisch wiederkehrenden Luftentzugs modelliert darauf eine Dichte der Luft im Regenarator; d.h. mit der Abkühlung der Luft im Regenerator steigt die Dichte der Luft. Dies führt zu einer zyklisch wiederkehrenden Abnahme der Falschluft. Mit der Erwärmung der Luft im Regenerator steigt die Dichte der Luft. Dies führt zu einer zyklisch wiederkehrenden Zunahme der Falschluft. Dieses Trendmuster kann vorteilhaft im Rahmen der modellierten Funktion der Falschluft als Ansatz für eine Glättung oder sonstigen Ausgleich der Falschluft-Messwerte dienen. Solche geglätteten oder dergleichen ausgeglichenen Werte lassen sich dann im Rahmen einer Regelung verwenden.

Des Weiteren nutzt die zweite Ausführungsform zur Ermittlung des Brennluftvolumenstroms SP_BRENNLUFT und/oder des Sauerstoffvolumenstroms SP_OXYGEN und/oder des Brenngasvolumenstroms SP_BRENNGAS den Quotienten aus Energie-SOLL-Wert SP_ENERGIE und einem thermischen Wirkungsgrad $\mu$_therm. Mit Vorteil versehen, ist dieser thermische Wirkungsgrad $\mu$_therm zeitlich nicht konstant sondern lässt sich als Funktion von Ofenluft und Brenngasvariablen darstellen. Dieser Maßgabe legt die Erkenntnis zugrunde, dass eine Steuerung und Regelung vorteilhaft abzustellen ist eher auf denjenigen Energieinhalt, welcher im Ofen zur Verfügung steht bzw. im Ofen bleibt (Quotient SP_ENERGIE/$\mu$_therm) als auf denjenigen Energiebedarf, welcher eingebracht ist (Energieeintrag). Die Weiterbildung für diese zweite Ausführungsform hat erkannt, dass ein Teil der als Energiebedarf angegebenen Energie SP_ENERGIE eben nicht im Ofen verbleibt sondern durch einige inhärenter Prozesse abfließt. Hier ist auf jeden Fall der Energieinhalt der abfließenden und zufließenden Luftströme der abfließenden und zufließenden Abgasströme zu nennen, neben den Temperaturpotenzialen des Ofens und der Regeneratoren, die hiermit Q_ABGAS für VOL_AG und Q_LUFT für VOL_LUFT sowie T_Ofen und T_Reg bezeichnet sind.

Hinzu kommt die Abhängigkeit des thermischen Wirkungsgrades auch vom Strahlungsverhalten der Flamme. Dies ist zu berücksichtigen im Wesentlichen grundsätzlich im Hinblick auf ein Kohlenstoff zu Wasserstoff-Verhältnis C/H des Brennstoffs. In dem mit dem Quotienten SP_ENERGIE/$\mu$_therm anstelle des Energie-SOLL-Werts SP_ENERGIE - also dem im Ofen verbleibenden Energieinhalt anstelle des eingebrachten Energieinhalts (Energieeintrag) - gearbeitet wird im Rahmen der Steuerung und Regelung ergibt sich ein besonders prozessnaher realistischer Regelungsansatz, der zu dem gewisse wiederkehrende Trendmuster im Energiebedarf berücksichtigen kann. So ergibt sich insbesondere eine vorteilhafte Berücksichtigung von unterschiedlichen Brennstoffinhalten bei unterschiedlichem Brennstoffangebot als auch die Möglichkeit gewisse Gegebenheiten bei unterschiedlichen Industrieöfen zu berücksichtigen, etwa wenn diese Besonderheiten oder Unregelmäßigkeiten bei Abgas und Luftführungen aufweisen.

**Ausführungsbeispiele**

**1. Ausgangslage (1) = (2) - davon (1) mit Verhältnisregelung, (2) mit Lambdasollwert.**

Ein Industrieofen - z.B. eine Glasschmelzwanne - hat einen Energiebedarf für Wärmgut (Schmelze) und Deckung der Wandverluste von 12.742 kW und wird beheizt mit Erdgas mit folgenden wärmetechnischen Kenngrößen:

|  |  |  |
|---|---|---|
| - Heizwert Hu | 10,138 kWh/Nm3 | unterer Heizwert des Brenngases |
| - LMIN | 9,695 Nm3/Nm3 | stöchiometrischer Luftbedarf je Gasvolumen |
| - LMINE | 0,9563 Nm3/kWh | stöchiometrischer Luftbedarf je Energieeinheit |
| - AMINE | 1,0565 Nm3/kWh | stöchiometrisches Abgasvolumen je Energieeinheit |

Es wurden mit Sauerstoffsonden 1,3% Restsauerstoff im Abgas gefunden. Hieraus wird die Luftzahl mit LAMBDA = 1,079 bestimmt.

Die Falschluftmenge wurde aus dem Vergleich mit gemessener Luftmenge als XF = 300 Nm3/h bestimmt.

Die Falschluftmenge wurde aus dem Vergleich mit gemessener Luftmenge als XF = 300 Nm3/h bestimmt.

Der thermische Wirkungsgrad beträgt 68,89%.

Der Energiebedarf Gas ist mit diesem Wirkungsgrad E.Gas = 12.742 / 69,89% = 18.497 kW Die Gasmenge ist daraus SP-Gas = E.Gas / Hu = 18.496 kW / 10,138 kWh/Nm3 = 1.824,6 Nm3/h.

Um einen Luftüberschuss LAMBDA= 1,080 zu ermöglichen, müssen abzüglich der aus unkontrollierten Quellen hinzutretenden 300 Nm3/h Falschluft an kontrollierter BRENNLUFT zugeführt werden: BRENNLUFT = E.Gas * LMINE - XF = 18.497 kW * 0,9563 Nm3/kWh -300 Nm3/h = 18.804 Nm3/h mit einer spezifischen Wärme von Cp.Luft = 1,329 kJ/K/Nm3 bei 1200 °C.

Die Abgasmenge beträgt ABGAS = E.Gas * (AMINE + (LAMBDA-1)*LMINE) = 22.491 Nm3/h Mit einer spezifischen Wärme von Cp.Abgas = 1,610 kJ/K/Nm3 bei 1400 °C.

Der thermische Wirkungsgrad wird damit berechnet zu: ETA.therm = (E.Gas + BRENNLUFT*CP.Luft*1200 -

ABGAS*Cp.Abgas*1400)/E.Gas = 68,89% und geht rekursiv in o.a. Rechnung wieder ein, die Rechnung wurde rekursiv wiederholt, bis der Eingangswert des thermischen Wirkungsgrades mit dem Ergebnis übereinstimmt.

## 2. Höhere Gasqualität (3)

In dem gleichen Industrieofen mit unverändertem Energiebedarf von 12.742 kW kommt nun ein Erdgas mit höherem Heizwert und folgenden Kenndaten zum Einsatz:

| | | |
|---|---|---|
| - Heizwert Hu | 10,587 kWh/Nm3 | unterer Heizwert des Brenngases |
| - LMIN | 10,096 Nm3/Nm3 | stöchiometrischer Luftbedarf je Gasvolumen |
| - LMINE | 0,9537 Nm3/kWh | stöchiometrischer Luftbedarf je Energieeinheit |
| - AMINE | 1,0522 Nm3/kWh | stöchiometrisches Abgasvolumen je Energieeinheit |

Es wird für den Übergang mit unverändert LMINE = 0,9563 Nm3/kWh gerechnet.

Die Falschluftmenge ist unverändert XF = 300 Nm3/h Der thermische Wirkungsgrad beträgt 68,93%.

Der Energiebedarf Gas ist mit diesem Wirkungsgrad E.Gas = 12.742 / 68,93% = 18.485 kW.

Die Gasmenge ist daraus SP-Gas = E.Gas / Hu = 18.485 kW / 10,587 kWh/Nm3 = 1.746,1 Nm3/h.

Um einen Luftüberschuss LAMBDA= 1,080 zu ermöglichen, müssen abzüglich der aus unkontrollierten Quellen hinzutretenden 300 Nm3/h Falschluft an kontrollierter BRENNLUFT zugeführt werden: BRENNLUFT = E.Gas * LMINE - XF = 18.485 kW * 0,9563 Nm3/kWh - 300 Nm3/h = 18.792 Nm3/h mit einer spezifischen Wärme von Cp.Luft = 1,329 kJ/K/Nm3 bei 1200 °C.

Die Abgasmenge beträgt ABGAS = E.Gas * (AMINE + (LAMBDA-1)*LMINE) = 22.448 Nm3/h Mit einer spezifischen Wärme von Cp.Abgas = 1,610 kJ/K/Nm3 bei 1400 °C.

Der thermische Wirkungsgrad wird damit berechnet zu:

$$\text{ETA.therm} = (\text{E.Gas} + \text{BRENNLUFT*CP.Luft*1200} - \text{ABGAS*Cp.Abgas*1400})/\text{E.Gas} = 68,93\%$$

und geht rekursiv in o.a. Rechnung wieder ein.

## 3. Geminderte Gasqualität - L-Gas anstelle von H-Gas (4)

In dem gleichen Industrieofen mit unverändertem Energiebedarf von 12.742 kW kommt nun ein Erdgas mit höherem Heizwert und folgenden Kenndaten zum Einsatz:

| | | |
|---|---|---|
| - Heizwert Hu | 8,783 kWh/Nm3 | unterer Heizwert des Brenngases |
| - LMIN | 8,4078 Nm3/Nm3 | stöchiometrischer Luftbedarf je Gasvolumen |
| - LMINE | 0,9573 Nm3/kWh | stöchiometrischer Luftbedarf je Energieeinheit |
| - AMINE | 1,0722 Nm3/kWh | stöchiometrisches Abgasvolumen je Energieeinheit |

Es wird für den Übergang mit unverändert LMINE = 0,9563 Nm3/kWh gerechnet.

Die Falschluftmenge ist unverändert XF = 300 Nm3/h. Der thermische Wirkungsgrad beträgt 68,24%.

Der Energiebedarf Gas ist mit diesem Wirkungsgrad E.Gas = 12.742 / 68,24% = 18.672 kW Die Gasmenge ist daraus SP-Gas = E.Gas / Hu = 18.672 kW / 8,783 kWh/Nm3 = 2.125,9 Nm3/h Erwartungsgemäß erfordert bereits der Energiebedarf des Ausgangszustandes mit dem geringeren Heizwert ein größeres Gasvolumen. Dazu kommt die Erhöhung des Energiebedarfes selbst gegenüber dem Ausgangszustand aufgrund der bei L-Gas ca. 13% inerten Brenngasbestandteile, die zur Verbrennung nicht beitragen, aber dennoch auf die gleiche Abgastemperatur erhitzt werden müssen. (Siehe Anspruch 9).

Um einen Luftüberschuss LAMBDA= 1,080 zu ermöglichen, müssen abzüglich der aus unkontrollierten Quellen hinzutretenden 300 Nm3/h Falschluft an kontrollierter BRENNLUFT zugeführt werden: BRENNLUFT = E.Gas * LMINE - XF = 18.672 kW * 0,9563 Nm3/kWh - 300 Nm3/h = 18.984 Nm3/h mit einer spezifischen Wärme von Cp.Luft = 1,329 kJ/K/Nm3 bei 1200 °C.

Die Abgasmenge beträgt ABGAS = E.Gas * (AMINE + (LAMBDA-1)*LMINE) = 22.963 Nm3/h. Mit einer spezifischen Wärme von Cp.Abgas = 1,610 kJ/K/Nm3 bei 1400 °C.

Der thermische Wirkungsgrad wird damit berechnet zu:

$$\text{ETA.therm} = (\text{E.Gas} + \text{BRENNLUFT*CP.Luft*1200} - \text{ABGAS*Cp.Abgas*1400})/\text{E.Gas} = 68{,}24\%$$

und geht rekursiv in o.a. Rechnung wieder ein.

**Patentansprüche**

1. Verfahren zum geregelten Betrieb eines, insbesondere regenerativ, beheizten Industrieofens (100) mit einem Ofenraum (10), insbesondere mit einer Schmelzwanne, insbesondere für Glas, aufweisend die Schritte:

   - Führen von Brennstoff in den Ofenraum (10) über wenigstens einen Brennstoff-Injektor (20, 20'), der zur Injektion von Brennstoff ausgebildet ist,
   - Führen eines gasförmigen Sauerstoffträgers zum Ofenraum (10), wobei
   die Zufuhr von Brennstoff und die Zufuhr des gasförmigen Sauerstoffträgers mittels einer Regelschleife geregelt wird, und
   - mit einem Stellglied eine erste stellbare Stellgröße in Form eines Brennstoffstroms zum Ofenraum (10) und/oder eine zweite stellbare Stellgröße in Form eines Stroms des gasförmigen Sauerstoffträgers zum Ofenraum (10) eingestellt wird, wobei in der Regelschleife:
   - ein Energiebedarf (E) ermittelt wird und
   - der Energiebedarf (E) einer Mengenregelung (VB-R) für den gasförmigen Sauerstoffträger und einer Brennstoffmengenregelung (BS-R) für den Brennstoff zugeführt wird, und
   - der Strom des gasförmigen Sauerstoffträgers ermittelt wird unter Berücksichtigung --optional unter Abzug von Falschluft und/oder weiteren Luft-Korrekturen-- eines Produkts aus:

     - einem vorgegebenen Luft/Sauerstoff-Überschuss (SP_LAMBDA),
     - direkt dem Energiebedarf (E) und
     - einem vorgegebenen Brenn-Luft/Sauerstoff-Bedarf als Luft/Sauerstoff-Menge pro Energieeinheit, **dadurch gekennzeichnet, dass**
     - der Brennstoffstrom ermittelt wird unter Berücksichtigung --optional unter Korrektur über eine Brennstoffbegrenzung und/oder weiteren Brennstoff-Korrekturen -- eines Quotienten aus:

       - direkt dem Energiebedarf (E) und
       - einem Heizwert des Brennstoffes (BS).

2. Verfahren nach Anspruch 1, **dadurch gekennzeichnet, dass** sich betreffend das genannte Produkt:

   - der vorgegebene, insbesondere konstant vorgegebenen, Luft/Sauerstoff-Überschuss (SP_LAMBDA), aus einer technologisch optimierten Prozessführung ergibt und/oder
   - der Energiebedarf (E), insbesondere als Energie-SOLL-Wert (SP_ENERGIE), aus einer Vorgabe einer Temperatur für den Ofenraum (10) ergibt, und/oder
   - der vorgegebene, insbesondere als "energiebezogene Luft/Sauerstoff'-Konstante (LMINE, OMINE, LMINX) konstant vorgegebenen, stöchiometrische Brenn-Luft/Sauerstoff-Bedarf aus einer Langzeitermittlung ergibt.

3. Verfahren nach Anspruch 1 oder 2, **dadurch gekennzeichnet, dass** sich betreffend den genannten Quotienten:

   - der Energiebedarf (E), insbesondere als Energie-SOLL-Wert (SP_ENERGIE), aus einer Vorgabe einer Temperatur für den Ofenraum (10) ergibt,
   - der Heizwert des Brennstoffes (BS) aus einem aktuell bestimmten Heizwert des Brennstoffes (BS) ergibt.

4. Verfahren nach einem der Ansprüche 1 bis 3, **dadurch gekennzeichnet, dass**

   - der Strom des gasförmigen Sauerstoffträgers, insbesondere des Brennluftstroms und/oder des Sauerstoffstroms, insbesondere als Prozesswert eines Stroms des gasförmigen Sauerstoffträgers, insbesondere eines Brennluftvolumenstroms (SP_BRENNLUFT) und/oder eines Sauerstoffvolumenstroms (SP_OXYGEN), folgt:
   dem fest vorgegebenen, als "energiebezogene Luft/Sauerstoff'-Konstante (LMINE, OMINE, LMINX) konstant vorgegebenen, stöchiometrischen Brenn-Luft/Sauerstoff-Bedarf als Luft/Sauerstoff-Menge pro Energieeinheit,
- der sich aus einer Langzeitermittlung ergibt, und/oder
- der Brennstoffstrom, als Prozesswert eines Brennstoffvolumenstroms (SP_BRENNGAS), folgt:
- einem variabel vorgegebenen reziproken des Heizwertes des Brennstoffes (BS),
- als ein aktuell bestimmter Heizwert des Brennstoffes (BS), als Brennstoffmenge pro Energieeinheit.

5. Verfahren nach einem der Ansprüche 1 bis 4, **dadurch gekennzeichnet, dass** für eine Temperaturregelung:

- aus einer Regelabweichung zwischen einem IST-Wert einer, insbesondere gemessenen und/oder rechnerisch ermittelten, Temperatur (T) des Ofenraums (10), der Energiebedarf (E) ermittelt wird, und/oder
- das Stellglied der Regelschleife (RS) zugeordnet ist und die Temperaturregelung in der Regelschleife (RS) mit der Ofenraumtemperatur als Regelgröße und einem Regler, insbesondere einem PID-Regler, integriert ist.

6. Verfahren nach einem der Ansprüche 1 bis 5, **dadurch gekennzeichnet, dass** der Energiebedarf (E) ermittelt wird,

- unter Vorgabe einer gewünschten Temperatur des Ofenraums (10) und/oder des Energiebedarfs (E), insbesondere unabhängig von einer Temperaturregelung in der Regelschleife (RS), und/oder
- als Ergebnis einer übergeordneten Temperaturregelung, einer Simulation auf Grundlage eines Ofenmodells und/oder einer Vorsteuerung.

7. Verfahren nach einem der Ansprüche 1 bis 6, **dadurch gekennzeichnet, dass** der Strom des gasförmigen Sauerstoffträgers, insbesondere Brennluftstroms und/oder Sauerstoffstroms, insbesondere als Prozesswert eines Stroms des gasförmigen Sauerstoffträgers, insbesondere Brennluftvolumenstroms (SP_BRENNLUFT) und/oder Sauerstoffvolumenstroms (SP_OXYGEN), ermittelt wird unter Berücksichtigung des genannten Produkts und optional unter Abzug von Falschluft und/oder weiteren Luft-Korrekturen bzw. unter Abzug eines Sauerstoffanteils eines Wertes der Falschluft und/oder eines Sauerstoffanteils eines Wertes der weiteren Luft-Korrekturen.

8. Verfahren nach Anspruch 7, **dadurch gekennzeichnet, dass** der Wert der Falschluft gewonnen wird aus dem Produkt eines gemessenen Luft/Sauerstoff-Überschuss (Prozesswert PV_LAMBDA) multipliziert mit dem konstant vorgegebenen, stöchiometrischer BrennLuft/Sauerstoff-Bedarf als Luft/Sauerstoff-Menge pro Energieeinheit (LMINE), multipliziert mit dem Energieeintrag (E) in den Ofen als IST-Wert, abzüglich einer unabhängig gemessenen Luftmenge am Eingang des Ofens (Prozesswert der Verbrennungsluft PV_LUFT).

9. Verfahren nach Anspruch 7 oder 8, **dadurch gekennzeichnet, dass**

- ein zeitlicher Verlauf der Werte für Falschluft bzw. eines Sauerstoffanteils jeweils der Werte der Falschluft ermittelt wird, insbesondere gemessen und/oder gewonnen wird, und
- der zeitliche Verlauf geglättet oder mit einem Ausgleichsverfahren behandelt wird, insbesondere mit einer statistischen oder Fehlerausgleichs-Methode, insbesondere wobei
- ein Ansatz für die Glättung oder dergleichen Ausgleich gewonnen wird aus einer modellbasierten funktionalen Bestimmung der Falschluft,
- wobei die Falschluft bzw. der Sauerstoffanteil des Wertes der Falschluft bestimmt wird als Funktion eines Ofendrucks (p_Ofen), eines Drucks am Regeneratorfuß (p_RegFuß), einer Temperatur der Brennluft im Regenerator (T_VB) und einer Temperatur der Umgebung des Ofens (T_U); insbesondere bestimmt wird als XFM (p_Ofen, p_RegFuß, T_VB, T_U).

10. Verfahren nach einem der Ansprüche 7 bis 9, **dadurch gekennzeichnet, dass** die Option betreffend die weitere Berücksichtigung von Luft-Korrekturen bzw. den Sauerstoffanteil eines Wertes der Luft-Korrekturen

- eine Toleranz des Energiebedarfs (E) berücksichtigt, und/oder
- der Energiebedarf um eine einstellbare Toleranzgröße gemindert wird,
- insbesondere wobei die Toleranzgröße mindestens so groß bemessen wird, dass Ungenauigkeiten der Bestimmung des Energiegehaltes des Brennstoffes den Sollwert des Stroms des gasförmigen Sauerstoffträgers, insbesondere des Brennluftstroms (SP_BRENNLUFT) und/oder Sauerstoffstroms (SP_OXYGEN), nicht verändern.

11. Verfahren nach einem der Ansprüche 1 bis 10 **dadurch gekennzeichnet, dass** der Energiebedarf (E) bestimmt wird als eine Sollgröße für den technologisch notwendigen Energiebedarf (E) des Industrieofens oder eines zu regelnden Ofenbereiches, vorzugsweise unter Berücksichtigung eines, insbesondere veränderlichen, thermischen Wirkungsgrads ($\mu$_therm), und/oder

- ein solcher Energie-SOLL-Wert (SP_ENERGIE), vorzugsweise unter Berücksichtigung des, insbesondere veränderlichen, thermischen Wirkungsgrads ($\mu$_therm), bestimmt wird, insbesondere als Quotient (SP_ENERGIE/ $\mu$_therm) von Energie-SOLL-Wert (SP_ENERGIE) und thermischen Wirkungsgrads ($\mu$_therm),
- vorzugsweise der Quotient (SP_ENERGIE/ $\mu$_therm) anstelle des Energie-SOLL-Werts (SP_ENERGIE) eingeht in die Ermittlung des Brennluftvolumenstroms (SP_BRENNLUFT) und/oder des Sauerstoffvolumenstroms (SP_OXYGEN) und/oder des Brenngasvolumenstroms (SP_BRENNGAS).

**12.** Verfahren nach einem der Ansprüche 1 bis 11 **dadurch gekennzeichnet, dass** der Brennstoffstrom, insbesondere als Prozesswert eines Brennstoffvolumenstroms (SP_BRENNGAS), ermittelt wird unter Berücksichtigung des genannten Quotienten und optional unter Korrektur über eine Brennstoffbegrenzung und/oder weiterer Brennstoff-Korrekturen, wobei

die Option betreffend die Brennstoffbegrenzung,

- eine Toleranz der Brennstoffmenge berücksichtigt, und/oder
- der Sollwert Brennstoff (SP_BRENNGAS) durch einen Faktor begrenzt wird, gebildet aus dem Quotienten (PV_BRENNLUFT*(1+TLZ)/SP_BRENNLUFT, PV_BRENNLUFT*(1+TLZ)/SP_OXYGEN) des Prozesswertes Brennluft und/oder Sauerstoffs, vergrößert um eine einstellbare Toleranzgröße (TLZ), geteilt durch den Sollwert des Brennluftstroms (SP_BRENNLUFT) und/oder Sauerstoffstroms (SP_OXYGEN), insbesondere Begrenzungsfaktor nach oben auf 1,0 zu begrenzen ist,
- und/oder wobei die Toleranzgröße (TLZ) so einzustellen ist, dass unvermeidliche Schwankungen der Messung des Brennluftmengenstroms (PV_BRENNLUFT) den Soll-wert (SP_BRENNSTOFF) nicht beeinflussen bzw. unvermeidliche Schwankungen der Messung des Brenn-Luft/Sauerstoff-Mengenstroms (PV_BRENNLUFT, PV_OXYGEN) den Sollwert (SP_BRENNSTOFF, SP_OXYGEN) nicht beeinflussen.

**13.** Verfahren nach Anspruch 12, **dadurch gekennzeichnet, dass** die Option betreffend weitere Brennstoff-Korrekturen,

- zusätzlich zu den Korrekturen des Sollwertes Brennstoff, insbesondere Brenngas (SP_Brenngas), ein Korrekturfaktor angebracht wird, der eine Veränderung des Energiebedarfs durch veränderte Abgasmenge berücksichtigt, und/oder
- eine Größe (AMINE) stöchiometrisches Abgasvolumen je Energieeinheit gebildet wird, deren Veränderung dem ursprünglichen Energie-SOLL-Wert (SP_ENERGIE) aufzuschalten ist.

**14.** Verfahren nach einem der Ansprüche 1 bis 13 **dadurch gekennzeichnet, dass** sich der vorgegebene, insbesondere konstant vorgegebene, Luft/Sauerstoff-Überschuss (SP_LAMBDA),

- aus einer technologisch optimierten Prozessführung ergibt und/oder
- eingestellt wird hinsichtlich einer nah- oder unterstöchiometrischen Verbrennung ($\lambda$<=1).

**15.** Steuer- und/oder Regel-Einrichtung zur Regelung eines Betriebs eines, insbesondere regenerativ, beheizten Industrieofens (100) mit einem Ofenraum (10), insbesondere mit einer Schmelzwanne, insbesondere für Glas, insbesondere ausgebildet zur Durchführung eines Verfahrens nach einem der Ansprüche 1 bis 14, aufweisend ein Regelmodul mit:

- einer Mengenregelung (VB-R) für den gasförmigen Sauerstoffträger und einer Brennstoffmengenregelung (BS-R) für den Brennstoff,
- einem Modul (203) mit dem der Energiebedarf (E) ermittelt wird und
- einer Regelverbindung mittels der der Energiebedarf (E) der Mengenregelung (VB-R) für den gasförmigen Sauerstoffträger und der Mengenregelung (BS-R) für den Brennstoff zugeführt wird, und wobei mit der Mengenregelung (VB-R) für den gasförmigen Sauerstoffträger der Brennluftstrom ermittelt wird unter Berücksichtigung --optional unter Abzug von Falschluft und/oder weiterer Luft-Korrekturen-- eines Produkts aus:
- einem vorgegebenen Luft/Sauerstoff-Überschuss (SP_LAMBDA),
- direkt dem Energiebedarf (E), und
- einem vorgegebenen Brenn-Luft/Sauerstoff-Bedarf als Luft/Sauerstoff-Menge pro Energieeinheit,
**gekennzeichnet durch**
- die Brennstoffmengenregelung (BS-R), in welcher der Brennstoffstrom ermittelt wird unter Berücksichtigung --optional unter Korrektur über eine Brennstoffbegrenzung und/oder weiteren Brennstoff-Korrekturen -- eines Quotienten aus:
- direkt dem Energiebedarf (E) und
- einem Heizwert des Brennstoffes (BS).

16. Beheizbarer Industrieofen (100), insbesondere regenerativ beheizbarer Industrieofen (100), mit einem Ofenraum (10), insbesondere mit einer Schmelzwanne, insbesondere für Glas, aufweisend:

- eine Führung von Brennstoff in den Ofenraum (10) über wenigstens einen Brennstoff-Injektor (20, 20'), der zur Injektion von Brennstoff ausgebildet ist,
- eine Führung eines gasförmigen Sauerstoffträgers zum Ofenraum (10), wobei
die Zufuhr von Brennstoff und die Zufuhr des gasförmigen Sauerstoffträgers, insbesondere Brennluft und/oder Sauerstoff, mittels einer Regelschleife geregelt wird, und
- mit einem Stellglied eine erste stellbare Stellgröße in Form eines Brennstoffstroms zum Ofenraum (10) und/oder eine zweite stellbare Stellgröße in Form eines Stroms des gasförmigen Sauerstoffträgers zum Ofenraum (10) eingestellt wird, und
- mit der Steuer- und/oder Regel-Einrichtung des Anspruchs 15.

## Claims

1. Method for the controlled operation of a heated industrial furnace (100), in particular a regeneratively heated industrial furnace, with a furnace chamber (10), in particular with a melting end, in particular for glass, comprising the steps of:

- conducting fuel into the furnace chamber (10) by way of at least one fuel injector (20, 20'), which is designed for the injection of fuel,
- conducting a gaseous oxygen carrier to the furnace chamber (10), wherein
the supply of fuel and the supply of the gaseous oxygen carrier is controlled by means of a control loop, and
- a first adjustable manipulated variable in the form of a flow of fuel to the furnace chamber (10) and/or a second adjustable manipulated variable in the form of a flow of the gaseous oxygen carrier to the furnace chamber (10) is set by a final controlling element, wherein in the control loop:
- an energy requirement (E) is determined and
- the energy requirement (E) is fed to a quantitative control (VB-R) for the gaseous oxygen carrier and to a quantitative fuel control (BS-R) for the fuel, and
- the flow of the gaseous oxygen carrier is determined with allowance -- optionally with subtraction of infiltrated air and/or further air corrections -- for a product of:
- a specified air/oxygen excess (SP_LAMBDA),
- directly the energy requirement (E) and
- a specified combustion air/oxygen requirement, as a quantity of air/oxygen per unit of energy, **characterized in that**
- the flow of fuel is determined with allowance -- optionally with correction by way of a fuel limitation and/or further fuel corrections -- for a quotient of:
- directly the energy requirement (E) and
a calorific value of the fuel (BS).

2. Method according to Claim 1, **characterized in that**, with respect to the stated product:

- the specified, in particular constantly specified, air/oxygen excess (SP_LAMBDA) is obtained from a technologically optimized process control and/or
- the energy requirement (E), in particular as the energy SETPOINT value (SP_ENERGY), is obtained from a specification of a temperature for the furnace chamber (10), and/or
- the specified stoichiometric combustion air/oxygen requirement, in particular constantly specified as an "energy-related air/oxygen" constant (LMINE, OMINE, LMINX), is obtained from a long-term determination.

3. Method according to Claim 1 or 2, **characterized in that**, with respect to the stated quotient:

- the energy requirement (E), in particular as the energy SETPOINT value (SP_ENERGY), is obtained from a specification of a temperature for the furnace chamber (10),

- the calorific value of the fuel (BS) is obtained from a calorific value of the fuel (BS) determined at the particular time.

4. Method according to one of Claims 1 to 3, **characterized in that**

- the flow of the gaseous oxygen carrier, in particular the flow of combustion air and/or the flow of oxygen, in particular as a process value of a flow of the gaseous oxygen carrier, in particular of a volumetric flow of combustion air (SP_COMBAIR) and/or of a volumetric flow of oxygen (SP_OXYGEN), follows the fixed specified stoichiometric combustion air/oxygen requirement, constantly specified as an "energy-related air/oxygen" constant (LMINE, OMINE, LMINX), as a quantity of air/oxygen per unit of energy,
- that is obtained from a long-term determination, and/or
- the flow of fuel, as a process value of a volumetric flow of fuel (SP_FUELGAS), follows:
- a variably specified reciprocal of the calorific value of the fuel (BS),
- as a calorific value of the fuel (BS) determined at the particular time, as a quantity of fuel per unit of energy.

5. Method according to one of Claims 1 to 4, **characterized in that** for a temperature control:

- the energy requirement (E) is determined from a system deviation between an ACTUAL value of a temperature (T), in particular a measured and/or computationally determined temperature, of the furnace chamber (10), and/or
- the final controlling element is assigned to the control loop (RS) and the temperature control is integrated in the control loop (RS) with the furnace chamber temperature as a controlled variable and a controller, in particular a PID controller.

6. The method according to one of Claims 1 to 5, **characterized in that** the energy requirement (E) is determined

- along with specification of a desired temperature of the furnace chamber (10) and/or of the energy requirement (E), in particular independently of a temperature control in the control loop (RS), and/or
- as a result of a higher-level temperature control, a simulation on the basis of a furnace model and/or a precontrol.

7. Method according to one of Claims 1 to 6, **characterized in that** the flow of the gaseous oxygen carrier, in particular flow of combustion air and/or flow of oxygen, is determined in particular as a process value of a flow of the gaseous oxygen carrier, in particular volumetric flow of combustion air (SP_COMBAIR) and/or volumetric flow of oxygen (SP_OXYGEN), with allowance for the stated product and optionally with subtraction of infiltrated air and/or further air corrections or with subtraction of an oxygen fraction of a value of the infiltrated air and/or an oxygen fraction of a value of the further air corrections.

8. Method according to Claim 7, **characterized in that** the value of the infiltrated air is obtained from the product of a measured air/oxygen excess (process value PV_LAMBDA) multiplied by the constantly specified, stoichiometric combustion air/oxygen requirement as a quantity of air/oxygen per unit of energy (LMINE), multiplied by the energy input (E) into the furnace as an ACTUAL value, minus an independently measured quantity of air at the inlet of the furnace (process value of the combustion air PV_AIR).

9. Method according to Claims 7 or 8, **characterized in that**

- a time profile of the values for infiltrated air or an oxygen fraction respectively of the values of the infiltrated air is determined, in particular measured and/or obtained, and
- the time profile is smoothed or treated with a compensation method, in particular with a statistical or error compensation method, in particular wherein
- an approach for the smoothing or similar compensation is obtained from a model-based functional determination of the infiltrated air,
- wherein the infiltrated air or the oxygen fraction of the value of the infiltrated air is determined as a function of a furnace pressure (p_Furnace), a pressure at the foot of the regenerator (p_RegFoot), a temperature of the combustion air in the regenerator (T_VB) and a temperature of the surroundings of the furnace (T U); in particular is determined as XFM (p_Furnace, p_RegFoot, T_VB, T_U).

10. Method according to one of Claims 7 to 9, **characterized in that** the option concerning the further allowance for air corrections or the oxygen fraction of a value of the air corrections

- makes allowance for a tolerance of the energy requirement (E), and/or
- the energy requirement is reduced by an adjustable tolerance variable,
- in particular wherein the tolerance variable is set at least to such a magnitude that inaccuracies in the determination of the energy content of the fuel do not change the setpoint value of the flow of the gaseous oxygen carrier, in particular the flow of combustion air (SP_COMBAIR) and/or flow of oxygen (SP_OXYGEN).

11. Method according to one of Claims 1 to 10, **characterized in that** the energy requirement (E) is determined as a setpoint variable for the technologically necessary energy requirement (E) of the industrial furnace or a furnace region to be controlled, preferably with allowance for a thermal efficiency ($\mu$_therm), in particular a variable thermal efficiency, and/or

- such an energy SETPOINT value (SP_ENERGY), preferably with allowance for the thermal efficiency ($\mu$_therm), in particular the variable thermal efficiency, is determined in particular as a quotient (SP_ENERGY/ $\mu$_therm) of the energy SETPOINT value (SP_ENERGY) and the thermal efficiency ($\mu$_therm),
- preferably the quotient (SP_ENERGY/ $\mu$_therm) goes into the determination of the volumetric flow of combustion air (SP_COMBAIR) and/or the volumetric flow of oxygen (SP_OXYGEN) and/or the volumetric flow of fuel gas (SP_FUELGAS) instead of the energy SETPOINT value (SP_ENERGY).

12. Method according to one of Claims 1 to 11, **characterized in that** the flow of fuel, in particular as a process value of a volumetric flow of fuel (SP_FUELGAS), is determined with allowance for the stated quotient and optionally with correction by way of a fuel limitation and/or further fuel corrections, wherein the option concerning the fuel limitation

- makes allowance for a tolerance of the quantity of fuel, and/or
- the fuel setpoint value (SP_FUELGAS) is limited by a factor formed by the quotient (PV_COMBAIR*(1+TLZ)/SP_COMBAIR, PV_COMBAIR*(1+TLZ)/ SP_OXYGEN) of the combustion air and/or oxygen process value, increased by an adjustable tolerance variable (TLZ), divided by the setpoint value of the flow of combustion air (SP_COMBAIR) and/or flow of oxygen (SP_OXYGEN); in particular the limiting factor should be limited upwardly to 1.0,
- and/or wherein the tolerance variable (TLZ) should be set such that unavoidable variations in the measurement of the quantitative flow of combustion air (PV_COMBAIR) do not influence the setpoint value (SP_COMBFUEL) and unavoidable variations in the measurement of the quantitative flow of combustion air/oxygen (PV_COMBAIR, PV_OXYGEN) do not influence the setpoint value (SP_COMBFUEL, SP_OXYGEN).

13. Method according to Claim 12, **characterized in that** the option concerning further fuel corrections,

- in addition to the corrections of the fuel setpoint value, in particular fuel gas setpoint value (SP_FUELGAS), a correction factor that makes allowance for a change in the energy requirement due to a changed quantity of flue gas is applied and/or
- a variable (AMINE) of stoichiometric volume of flue gas per unit of energy is formed, the changing of which should be fed forward to the original energy SETPOINT value (SP_ENERGY).

14. Method according to one of Claims 1 to 13, **characterized in that** the specified, in particular constantly specified air/oxygen excess (SP_LAMBDA),

- is obtained from a technologically optimized process control and/or
- is set with regard to a near-stoichiometric or substoichiometric combustion ($\lambda$<=1).

15. Open-loop and/or closed-loop control unit for controlling operation of a heated industrial furnace (100), in particular a regeneratively heated industrial furnace, with a furnace chamber (10), in particular with a melting end, in particular for glass, in particular designed for carrying out a method according to one of Claims 1 to 14, having a control module with:

- a quantitative control (VB-R) for the gaseous oxygen carrier and a quantitative fuel control (BS-R) for the fuel,
- a module (203) with which the energy requirement (E) is determined and
- a control connection by means of which the energy requirement (E) is fed to the quantitative control (VB-R) for the gaseous oxygen carrier and to the quantitative fuel control (BS-R) for the fuel, and, wherein with the quantitative control (VB-R) for the gaseous oxygen carrier, the flow of combustion air is determined with allowance --optionally with deduction of infiltrated air and/or further air correctionsfor a product of:

- a specified air/oxygen excess (SP_LAMBDA),
- directly the energy requirement (E), and
- a specified combustion air/oxygen requirement as a quantity of air/oxygen per unit of energy, **characterized by**
- the quantitative control of fuel (BS-R), in which the flow of fuel is determined with allowanceoptionally with correction by way of a fuel limitation and/or further fuel corrections -- for a quotient of:
- directly the energy requirement (E) and
- a calorific value of the fuel (BS).

16. Heatable industrial furnace (100), in particular a regeneratively heatable industrial furnace (100), with a furnace chamber (10), in particular with a melting end, in particular for glass, having:

- a conduit for fuel into the furnace chamber (10) by way of at least one fuel injector (20, 20'), which is designed for the injection of fuel,
- a conduit for a gaseous oxygen carrier to the furnace chamber (10), wherein
the supply of fuel and the supply of the gaseous oxygen carrier, in particular combustion air and/or oxygen, is controlled by means of a control loop, and
- a first adjustable manipulated variable in the form of a flow of fuel to the furnace chamber (10) and/or a second adjustable manipulated variable in the form of a flow of the gaseous oxygen carrier to the furnace chamber (10) is set by a final controlling element, and
- with the open-loop and/or closed-loop control unit of Claim 15.

## Revendications

1. Procédé pour le fonctionnement régulé d'un four industriel (100) chauffé, plus particulièrement, de manière régénérative, avec une chambre de four (10), plus particulièrement avec un bac de fusion, plus particulièrement pour du verre, comprenant les étapes suivantes :

- guidage de carburant vers la chambre du four (10) par l'intermédiaire d'au moins un injecteur de carburant (20, 20') qui est conçu pour l'injection de carburant,
- guidage d'un comburant gazeux vers la chambre du four (10), dans lequel
l'introduction de carburant et l'introduction du comburant gazeux est régulé au moyen d'une boucle de régulation et
- avec un organe de réglage, une première grandeur de réglage réglable est réglée sous la forme d'un débit de carburant vers la chambre du four (10) et/ou une deuxième grandeur de réglage réglable est réglée sous la forme d'un débit de comburant gazeux vers la chambre du four (10), dans lequel, dans la boucle de régulation :
- un besoin en énergie (E) est déterminé et
- le besoin en énergie (E) est introduit dans une régulation de quantité (VB-R) pour le comburant gazeux et une régulation de la quantité de carburant (BS-R) pour le carburant et
- le débit du comburant gazeux est déterminé en tenant compte - en option, déduction faite de l'air parasite et/ou des corrections d'air supplémentaires - d'un produit entre :

- un excédent air/oxygène prédéterminé (SP_LAMBDA),
- directement le besoin en énergie (E) et
- un besoin prédéterminé en air de combustion / oxygène en tant que quantité d'air/oxygène par unité d'énergie, **caractérisé en ce que**
- le débit de carburant est déterminé en tenant compte - en option avec une correction par l'intermédiaire d'une limitation de carburant et/ou de corrections de carburant supplémentaires - d'un rapport entre :

- directement le besoin en énergie (E) et
- un pouvoir calorifique du carburant (BS).

2. Procédé selon la revendication 1, **caractérisé en ce que**, en ce qui concerne le produit mentionné :

- l'excédent air-oxygène (SP_LAMBDA) prédéterminé, plus particulièrement prédéterminé de manière constante, résulte d'une conduite de process optimisée technologiquement et/ou
- le besoin en énergie (E), plus particulièrement en tant que valeur de CONSIGNE d'énergie (SP_ENERGIE), résulte d'une spécification de température pour la chambre du four (10) et/ou
- le besoin en air de combustion / oxygène stœchiométrique prédéterminé, plus particulièrement prédéterminé de manière constante en tant que constante « air/oxygène liée à l'énergie » (LMINE, OMINE, LMINX), résulte d'une détermination sur le long terme.

3. Procédé selon la revendication 1 ou 2, **caractérisé en ce que**, en ce qui concerne le rapport mentionné :

- le besoin en énergie (E), plus particulièrement en tant que valeur de CONSIGNE d'énergie (SP _ENERGIE), résulte d'une spécification de température pour la chambre du four (10),
- le pouvoir calorifique du carburant (BS) résulte d'un pouvoir calorifique actuellement déterminé du carburant (BS).

4. Procédé selon l'une des revendications 1 à 3, **caractérisé en ce que**

- le débit de comburant gazeux, plus particulièrement de l'air de combustion et/ou de l'oxygène, suit, plus particulièrement en tant que valeur de process d'un débit du comburant gazeux, plus particulièrement d'un débit volumique d'air de combustion (SP BRENNLUFT) et/ou d'un débit volumique d'oxygène (SP_OXYGEN) :
le besoin en air de combustion / oxygène stœchiométrique prédéterminé, plus particulièrement prédéterminé de manière constante en tant que constante « air/oxygène liée à l'énergie » (LMINE, OMINE, LMINX), en tant que quantité air/oxygène par unité d'énergie,
- qui résulte d'une détermination sur le long terme et/ou
- le débit de carburant, en tant que valeur de process d'un débit volumique de carburant (SP_BRENNGAS), suit :
- une réciproque, prédéterminée de manière variable, du pouvoir calorifique du carburant (BS),
- en tant que pouvoir calorifique déterminé actuellement du carburant (BS), en tant que quantité de carburant par unité d'énergie.

5. Procédé selon l'une des revendications 1 à 4, **caractérisé en ce que**, pour une régulation de température :

- à partir d'un écart de régulation entre une valeur EFFECTIVE d'une température (T), plus particulièrement mesurée et/ou déterminée par calcul, de la chambre du four (10), le besoin en énergie (E) est déterminé, et/ou
- l'organe de réglage correspond à la boucle de régulation (RS) et la régulation de température est intégrée dans la boucle de régulation (RS) avec la température de la chambre du four en tant que grandeur de régulation et un régulateur, plus particulièrement un régulateur PID.

6. Procédé selon l'une des revendications 1 à 5, **caractérisé en ce que** le besoin en énergie (E) est déterminé

- en indiquant une température souhaitée de la chambre du four (10) et/ou le besoin en énergie (E), plus particulièrement indépendamment d'une régulation de température dans la boucle de régulation (RS) et/ou
- en tant que résultat d'une régulation de température hiérarchiquement supérieure, d'une simulation sur la base d'un modèle de four et/ou d'une commande pilote.

7. Procédé selon l'une des revendications 1 à 6, **caractérisé en ce que** le débit de comburant gazeux, plus particulièrement de carburant et/ou d'oxygène est déterminé, plus particulièrement en tant que valeur de process d'un débit du comburant gazeux, plus particulièrement d'un débit volumique d'air de combustion (SP_BRENNLUFT) et/ou d'un débit volumique d'oxygène (SP_OXYGEN), en tenant compte du produit mentionné et, en option, déduction faite de l'air parasite et/ou avec des corrections d'air supplémentaires respectivement déduction faite d'une part d'oxygène d'une valeur de l'air parasite et/ou une part d'oxygène d'une valeur des corrections d'air supplémentaires.

8. Procédé selon la revendication 7, **caractérisé en ce que** la valeur de l'air parasite, obtenue à partir du produit d'un excédent air/oxygène mesuré (valeur de process PV _LAMBDA) multiplié par le besoin en air de combustion / oxygène stœchiométrique prédéterminé, plus particulièrement prédéterminé de manière constante en tant que constante « air/oxygène liée à l'énergie » (LMINE), multiplié par l'apport d'énergie (E) dans le four en tant que valeur EFFECTIVE, moins une quantité d'air mesurée indépendamment à l'entrée du four (valeur de processus de l'air de combustion PV_LUFT).

9. Procédé selon la revendication 7 ou 8, **caractérisé en ce que**

- un tracé chronologique des valeurs pour l'air parasite respectivement d'une part d'oxygène de chacune des valeurs de l'air parasite est déterminé, plus particulièrement mesuré et/ou obtenu et
- le tracé chronologique est lissé ou est traité avec un procédé de compensation, plus particulièrement avec une méthode statistique ou de compensation d'erreur, plus particulièrement dans lequel
- une approche pour le lissage ou une compensation similaire est obtenue à partir d'une détermination fonctionnelle de l'air parasite basée sur un modèle,
- dans lequel l'air parasite respectivement la part d'oxygène de la valeur de l'air parasite est déterminée en fonction d'une pression du four (p_Ofen), d'une pression au pied du régénérateur (p_regFuβ), d'une température de l'air de combustion dans le régénérateur (T_VB) et d'une température de l'environnement du four (T_U) ; plus particulièrement déterminé en tant que XFM (p_Ofen, p_RegFuβ, T_VB, T_U).

10. Procédé selon l'une des revendications 7 à 9, **caractérisé en ce que** l'option concernant la prise en compte supplémentaire des corrections d'air respectivement la part d'oxygène d'une valeur des corrections d'air

- prend en compte une tolérance du besoin en énergie (E) et/ou
- le besoin en énergie est réduit d'une valeur de tolérance réglable,
- plus particulièrement dans lequel la valeur de tolérance est dimensionnée au moins de façon à ce que les inexactitudes de la détermination de la teneur énergétique du carburant ne modifient par la valeur de consigne du débit du comburant gazeux, plus particulièrement du débit d'air de combustion (SP _BRENNLUFT) et/ou du débit d'oxygène (SP_OXYGEN).

11. Procédé selon l'une des revendications 1 à 10, **caractérisé en ce que** le besoin en énergie (E) est déterminé en tant que grandeur de consigne pour le besoin en énergie (E), nécessaire d'un point de vue technologique, du four industriel ou d'une partie de four à réguler, de préférence en tenant compte d'un rendement thermique, plus particulièrement variable, (μ_therm) et/ou

- une telle valeur d'énergie de CONSIGNE (SP_ENERGIE) est déterminée, de préférence en tenant compte du rendement thermique, plus particulièrement variable, (μ_therm), plus particulièrement en tant que rapport (SP_ENERGIE / μ_therm) entre la valeur d'énergie de CONSIGNE (SP_ENERGIE) et le rendement thermique (μ_therm),
- de préférence le rapport (SP_ENERGIE/μ_therm) est utilisé, à la place de la valeur d'énergie de CONSIGNE (SP _ENERGIE), dans la détermination du débit volumique d'air de combustion (SP_BRENNLUFT) et/ou du débit volumique d'oxygène (SP_OXYGEN) et/ou du débit volumique de gaz de combustion (SP_BRENNGAS).

12. Procédé selon l'une des revendications 1 à 11, **caractérisé en ce que** le débit de carburant est déterminé, plus particulièrement en tant que valeur de process d'un débit volumique de carburant (SP_BRENNGAS) en tenant compte du rapport mentionné et, en option, avec une correction par l'intermédiaire d'une limitation de carburant et/ou de corrections de carburant supplémentaires, dans lequel
l'option concernant la limitation de carburant,

- tient compte d'une tolérance de la quantité de carburant et/ou
- la valeur de consigne de carburant (SP_BRENNGAS) est limitée par un facteur obtenu à partir du rapport (PV_BRENNLUFT*(1+TLZ)/SP_BRENNLUFT, PV_BRENNLUFT*(1+TLZ)/SP_OXYGEN) de la valeur de processus de l'air de combustion et/ou de l'oxygène, agrandi d'une valeur de tolérance réglable (TLZ), divisée par la valeur de consigne du débit d'air de combustion (SP BRENNLUFT) et/ou du débit d'oxygène (SP_OXYGEN), plus particulièrement un facteur de limitation vers le haut doit être limité à 1,0,
- et/ou dans lequel la valeur de tolérance (TLZ) doit être réglée de façon à ce que les variations inévitables de la mesure du débit d'air de combustion (PV_BRENNLUFT) n'influent pas sur la valeur de consigne (SP_BRENNSTOFF) respectivement les variations inévitables de la mesure du débit d'air de combustion / oxygène (PV BRENNLUFT, PV_OXYGEN) n'influent pas sur la valeur de consigne (SP BRENNSTOF, SP_OXYGEN).

13. Procédé selon la revendication 12, **caractérisé en ce que** l'option concernant d'autres corrections de carburant

- en plus des corrections de la valeur de consigne de carburant, plus particulièrement du gaz de combustion (SP_BRENNGAS), un facteur de correction est introduit, qui tient compte d'une modification du besoin en énergie du fait d'une modification de la quantité de gaz d'échappement et/ou
- une grandeur (AMINE) du volume de gaz d'échappement stœchiométrique par unité d'énergie est obtenue, dont la modification est à relier à la valeur d'énergie de CONSIGNE (SP ENERGIE).

14. Procédé selon l'une des revendications 1 à 13, **caractérisé en ce que** l'excédent air/oxygène (SP _LAMBDA) prédéterminé, plus particulièrement prédéterminé de manière constante,

- résulte d'une conduite de processus optimisée technologiquement et/ou
- est réglé en ce qui concerne une combustion presque stœchiométrique ou sous-stœchiométrique ($\lambda \leq 1$).

15. Dispositif de commande et/ou de régulation pour la régulation d'un fonctionnement d'un four industriel (100), plus particulièrement chauffé de manière régénérative, avec une chambre de four (10), plus particulièrement avec un bac de fusion, plus particulièrement pour du verre, plus particulièrement conçu pour l'exécution d'un procédé selon l'une des revendications 1 à 14, comprenant un module de régulation avec :

- une régulation de quantité (VB-R) pour le comburant gazeux et une régulation de quantité de carburant (BS-R) pour le carburant,
- un module (203) avec lequel le besoin en énergie (E) est déterminé et
- une liaison de régulation au moyen de laquelle le besoin en énergie (E) de la régulation de quantité (VB-R) pour le comburant gazeux et la régulation de quantité de carburant (BS-R) pour le carburant sont fournis, et dans lequel, avec la régulation de quantité (VB-R) pour le comburant gazeux, le débit d'air de combustion est déterminé en tenant compte - en option, déduction faite de l'air parasite et/ou de corrections d'air supplémentaires
- d'un produit de :
- un excédent air/oxygène prédéterminé (SP LAMBDA),
- directement le besoin en énergie (E) et
- un besoin en air de combustion / oxygène prédéterminé en tant que quantité d'air/oxygène par unité d'énergie, **caractérisé par**
- la régulation de quantité de carburant (BS-R), dans laquelle le débit de carburant est déterminée en tenant compte - en option par une correction par l'intermédiaire d'une limitation de carburant et/ou de corrections de carburant supplémentaires - d'un rapport entre :
- directement le besoin en énergie (E) et
- un pouvoir calorifique du carburant (BS).

16. Four industriel chauffé (100), plus particulièrement four industriel chauffé de manière régénérative (100), avec une chambre de four (10), plus particulièrement avec une cuve de fusion, plus particulièrement pour du verre, comprenant :

- un guidage du carburant vers la chambre du four (10) par l'intermédiaire d'au moins un injecteur de carburant (20, 20') qui est conçu pour l'injection de carburant,
- un guidage d'un comburant gazeux vers la chambre du four (10), dans lequel
l'introduction de carburant et l'introduction du comburant gazeux, plus particulièrement l'air de combustion et/ou l'oxygène, est régulé au moyen d'une boucle de régulation et
- avec un organe de réglage, une première grandeur de réglage réglable est réglée sous la forme d'un débit de carburant vers la chambre du four (10) et/ou une deuxième grandeur de réglage réglable est réglée sous la forme d'un débit de comburant vers la chambre du four (10), et
- avec le dispositif de commande et/ou de régulation selon la revendication 15.

FIG. 1

EP 3 265 431 B1

FIG. 2A

EP 3 265 431 B1

FIG. 2B

BRENNLUFT = LUFT UND/ODER SAUERSTOFF

$$\text{SP\_BRENNLUFT} = \text{SP\_LAMBDA} * \underline{\text{LMINE}} * \text{MAXIMUM} \left\{ \begin{array}{l} \text{SP\_ENERGIE} \\[6pt] \text{PV\_ENERGIE} * (1\text{-}TLZ) \end{array} \right\} - \text{FALSCHLUFT}$$

⟨-KONST-⟩      KORR_LUFT_1      KORR_LUFT_2

$$\text{SP\_BRENNGAS} = \frac{\text{SP\_ENERGIE}}{\underline{\text{HEIZWERT}}} * \text{MINIMUM} \left\{ \begin{array}{l} 1{,}00 \\[6pt] \text{PV\_LUFT} * (1\text{+}TLZ) / \text{SP\_LUFT} \end{array} \right\}$$

⟨-VAR-⟩      KORR_GAS_1

STELLGLIED

FIG. 3A

EP 3 265 431 B1

BRENNLUFT = LUFT UND/ODER SAUERSTOFF

$$SP\_BRENNLUFT = SP\_LAMBDA * LMINE * MAXIMUM \left\{ \begin{array}{c} \dfrac{SP\_ENERGIE}{\mu_{therm}} \\ PV\_ENERGIE * (1-TLZ) \end{array} \right\} -XFM \left\{ \begin{array}{c} p_{Ofen} \\ p_{RegFuß} \\ T_{LR} \\ T_{U} \end{array} \right\}$$

-KONST-

KORR_LUFT_1          KORR_LUFT_2

$$SP\_BRENNGAS = \dfrac{\dfrac{SP\_ENERGIE}{\mu_{therm}}}{HEIZWERT} * MINIMUM \left\{ \begin{array}{c} 1,00 \\ PV\_LUFT * (1+TLZ) / SP\_LUFT \end{array} \right\}$$

-VAR-

KORR_GAS_1

STELLGLIED

EP 3 265 431 B1

FIG. 3B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010041155 A1
- DD 213746
- DE 102013204840 A1
- DE 102010041157 A1